(19) Europäisches Patentamt
European Patent Office
Office européen des brevets

(11) EP 3 274 417 B1

(12) # EUROPÄISCHE PATENTSCHRIFT

(45) Veröffentlichungstag und Bekanntmachung des Hinweises auf die Patenterteilung:
**09.01.2019 Patentblatt 2019/02**

(21) Anmeldenummer: **16710983.4**

(22) Anmeldetag: **21.03.2016**

(51) Int Cl.:
***C09K 9/02*** *(2006.01)* ***G02F 1/15*** *(2006.01)*

(86) Internationale Anmeldenummer:
**PCT/EP2016/056174**

(87) Internationale Veröffentlichungsnummer:
**WO 2016/150921 (29.09.2016 Gazette 2016/39)**

(54) **ELEKTROCHROMES ELEMENT MIT VERBESSERTER ELEKTROLYTSCHICHT**
ELECTROCHROMIC ELEMENT WITH IMPROVED ELECTROLYTE LAYER
ÉLÉMENT ÉLECTROCHROME MUNI D'UNE COUCHE ÉLECTROLYTIQUE AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2015 DE 102015104439**

(43) Veröffentlichungstag der Anmeldung:
**31.01.2018 Patentblatt 2018/05**

(73) Patentinhaber:
- **Fraunhofer-Gesellschaft zur Förderung der angewandten Forschung e.V.
80686 München (DE)**
- **Bayerische Motoren Werke Aktiengesellschaft
80809 München (DE)**

(72) Erfinder:
- **POSSET, Uwe
90556 Cadolzburg (DE)**
- **JOOST, Christine
71229 Leonberg (DE)**
- **SCHOTT, Marco
97753 Karlstadt (DE)**
- **CLADE, Jürgen
97246 Eibelstadt (DE)**
- **MÜLLER, Christine
97199 Ochsenfurt (DE)**
- **BECK, Matthias
80807 München (DE)**
- **PINSKER, Martin
84079 Bruckberg (DE)**
- **BOKOR, Tamás, Gellért
81543 München (DE)**
- **MESZAROS, Robert
81677 München (DE)**

(74) Vertreter: **Strehl Schübel-Hopf & Partner
Maximilianstrasse 54
80538 München (DE)**

(56) Entgegenhaltungen:
**EP-A1- 0 499 115 US-A1- 2014 009 812
US-B1- 7 586 663**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung bezieht sich auf ein flexibles elektrochromes Element (*electrochromic device,* ECD) mit verbesserter Elektrolytschicht, das bei Bedarf großflächig herstellbar ist und sich aufgrund seiner günstigen mechanischen und optischen Eigenschaften für große Fensterflächen, für gebogene Verglasungen, wie sie im Automobilbereich benötigt werden, aber auch für beliebige andere Verglasungen eignet, und zwar nicht nur, aber insbesondere dort, wo die elektrische Kontrolle der Lichttransmission aus Gründen der Energieeffizienz, der Sicherheit und/oder der Komfortverbesserung wünschenswert ist und/oder auch gebogene Scheiben realisiert werden müssen.

Es wäre äußerst vorteilhaft, wenn sich elektrochrome Elemente auch in der Fahrzeugverglasung realisieren lassen würden; jedoch sind die bisher verfügbaren Technologien nicht genügend ausgereift, um sich über den Kleinserienmaßstab hinaus zu verbreiten. Unter "Fahrzeugen" sind vorliegend dabei insbesondere Kraftfahrzeuge (PKW, LKW, Busse) und Krafträder zu verstehen, im erweiterten Sinne auch Schienen- und Wasserfahrzeuge sowie Flugzeuge. Es sprechen zwei Hauptvorteile für den Einsatz von elektrochrom schaltbaren Elementen in der Verglasung von Fahrzeugen:

1) Bessere Kontrolle des Klimas im Fahrzeuginnenraum (individuelle Gestaltung der Lichtverhältnisse, bedarfsgerechte Reduzierung der einfallenden Sonnenenergie, welche zu erhöhtem Komfort bzw. zur Reduktion des Kühlleistungsbedarfs führt).

2) Zielgerichtete Abschattung des Fahrzeuginneren vor Einsicht von außen (Privatsphärenschutz, Diebstahlschutz)

Um diesen beiden Rollen optimal gerecht zu werden, muss das elektrochrome Element viele Anforderungen erfüllen. Als besonders wichtig werden die Hell-/Dunkeltransmissionswerte und das durch sie vorgegebene Kontrastverhältnis (= Helltransmission:Dunkeltransmission) sowie der Transmissionshub (= Helltransmission-Dunkeltransmission) eingeschätzt, zudem der optische Eindruck in beiden Zuständen sowie die Schaltzeiten. Sowohl für die Klimakontrolle als auch für die visuelle Abschattungsfunktion sind hohe Kontrastwerte erstrebenswert, die die Funktionen verstärken.

Geringe Schaltzeiten sind wichtig, um den Nutzern den Schaltvorgang bewusst zu machen. Optimal hierfür sind Bereiche von weniger als 1 Minute, möglichst von unter 30 Sekunden oder noch weniger. Diese Schaltzeiten hängen u.a. stark von der Fenstergröße und vom Flächenwiderstand der Substrate ab. Ein weiterer wichtiger Faktor ist die Inbetriebnahme des Fahrzeugs bei vollständiger Verschattung - in diesem Fall müssen sich die Scheiben vor dem (und seitlich des) Fahrer(s)/Führer(s)/Piloten zunächst aufhellen, damit das Fahrzeug sicher betrieben werden kann - eine Verzögerung des Schaltvorgangs und damit des Losfahrens ist auf ein Minimum zu reduzieren.

Ein äußerst wichtiger Faktor speziell bei Kraftfahrzeugen ist die visuelle Transmission der Verglasung im Hellzustand vor und neben dem Fahrer. Damit eine Verglasung im Kraftfahrzeugbereich zugelassen wird, muss - neben einer ausreichend kleinen Dunkeltransmission - eine visuelle Helltransmission von mind. 70% gemäß DIN EN 410 erreicht werden. Ist diese Voraussetzung nicht erfüllt, reduziert sich die verfügbare Fläche und damit die Wirkung der elektrochromen Elemente auf die Fenster hinter der B-Säule im Kraftfahrzeug - ein wesentlicher Grund, warum den bisher bekannten, elektrochromen Technologien der Durchbruch im Bereich der Fahrzeugverglasung verwehrt geblieben ist. Diese können keinen ausreichend wahrnehmbaren Transmissionshub neben den geforderten kurzen Schaltzeiten erreichen. Neben all diesen Anforderungen muss das elektrochrome Element in gängige räumliche Strukturen der Fahrzeugverglasung (häufig mit um 2 Achsen gebogenen Geometrien) bzw. in die Prozesse zu deren Herstellung integriert werden können.

In der Fahrzeugverglasung werden bereits Technologien zum Zwecke der elektrisch schaltbaren Transparenz eingesetzt. Eine weit verbreitete Lösung ist der Einsatz sogenannter Suspended Particle Devices (SPD) von Research Frontiers. Die Vorteile dieser Technologie liegen im schnellen Schaltvorgang, dem ausgezeichneten Kontrastverhältnis und einem akzeptablen Transmissionshub. Jedoch existieren auch viele Nachteile, wie geringe thermische Stabilität und hohe Steuerspannungen (zur Erreichung des Hellzustands muss das SPD-Element unter 120 V Spannung stehen). Entscheidend ist jedoch, dass keine visuelle Transmission von mindestens 70% erreicht wird, was die möglichen Einsatzgebiete im wichtigen Kraftfahrzeugsegment begrenzt. SPD-Elemente finden Einsatz bei der Kabinenverglasung von Flugzeugen und Luxusjachten sowie in Dachsystemen von Oberklassekraftfahrzeugen.

Weiterhin sind spezielle LCD-Elemente bekannt, mit welchen sich die Transparenz einer Glasfläche verändern lässt. Diese bieten jedoch im Wesentlichen nur den einleitend genannten Hauptvorteil (2) für Fahrzeugverglasungen, da sie im undurchsichtigen Zustand nicht dunkel, sondern lediglich opak werden, d. h. die diffuse Lichtstreuung verstärken. Die Licht- und damit Energietransmission solcher Elemente liegt nicht deutlich unter denen von herkömmlichen Fahrzeugverglasungen.

Es wird somit eine verbesserte technische Lösung benötigt, die eine Anwendung von elektrochromen Elementen für die Anwendung in und an Fahrzeugen, insbesondere Kraftfahrzeugen, erlaubt. Darüber hinaus sollten sich in der genannten Hinsicht verbesserte elektrochrome Elemente auch für den Einsatz in vielen anderen Anwendungsbereichen

eignen, in welchen die elektrische Kontrolle der Lichttransmission aus Gründen der Energieeffizienz, der Sicherheit oder der Komfortverbesserung wünschenswert ist. Hierzu zählen vor allem intelligente Architekturverglasungen und dimmbare Flugzeugkabinenfenster, aber auch elektrisch schaltbare Sonnenbrillen sowie Haushaltsgeräte (z.B. dimmbare Kühlschrank- oder Ofentüren) und dergleichen.

Obwohl seit mehr als vier Jahrzehnten auf dem Gebiet der elektrochromen Materialien und Systeme geforscht wird, rücken flexible ECDs erst seit wenigen Jahren in den Fokus. Dies ist hauptsächlich der Tatsache geschuldet, dass zunächst an der Erforschung und Entwicklung von keramikartigen, spröden EC-Materialien gearbeitet wurde und leistungsfähige flexible leitfähige Substrate erst seit kurzer Zeit verfügbar sind.

Ein elektrochromes Element umfasst typischerweise ein erstes leitfähiges Substrat, das mit einem optisch aktiven, elektrochromen Material beschichtet ist (dieses wird nachstehend als "Arbeitselektrode", abgekürzt "AE" bezeichnet), ein zweites leitfähiges Substrat, das mit einem Ionenspeichermaterial beschichtet ist (dieses wird nachstehend als "Gegenelektrode", abgekürzt "GE" bezeichnet), und eine Elektrolytschicht, die sich zwischen diesen Elektroden befindet und diese elektrisch isolierend, aber ionenleitend verbindet (siehe Figur 1). Es sind ionenspeichernde Materialien bekannt, die bei Einlagerung der Ladungsträger ihre Farbe verändern und somit selbst als elektrochrome Materialien agieren können. Verläuft der Farbwechsel solcher GE entgegengesetzt synchron mit der AE, spricht man von komplementärer Einfärbung.

Idealerweise liegen alle Komponenten als feste Filme vor.

Das leitfähige Substrat kann grundsätzlich aus einem nichtleitenden Kunststoff oder Glas bestehen, der bzw. das mit einem dünnen Film eines elektrisch leitfähigen Materials beschichtet ist (aufgebracht z.B. über Sputterverfahren oder physikalische oder chemische Dampfphasenabscheidung). Die üblicherweise für das Substrat-Kernmaterial eingesetzten Kunststoffe erlauben die Herstellung flexibler bzw. gebogener ECDs. Die leitfähigen Oberflächenbeschichtungen können aus einem transparenten leitfähigen Metalloxid (engl. transparent conducting oxide, TCO) bestehen. Für Glas ist vor allem das mit Fluor dotierte Zinnoxid (FTO) zu nennen, ein Material, das wegen der zur Herstellung nötigen Temperaturen bisher nicht direkt auf Kunststoffsubstrate abgeschieden werden konnte. Neben solchen anorganischen Halbleiterschichten können auch organisch-polymere leitfähige Materialien eingesetzt werden, wie beispielsweise PEDOT [Poly(3,4-ethylendioxy)thiophen], ein Polymer mit geringer Bandlücke. Solche Polymere werden üblicherweise nasschemisch abgeschieden, z.B. über Rolle-zu-Rolle-Verfahren (R2R).

Der Elektrolyt kann prinzipiell aus einer Flüssigkeit, einem Gel, einem festen Polymer oder einem keramikartigen ("all-solid-state") Material bestehen. Auch Mischformen sind bekannt, wie beispielsweise mit anorganischen Nanopartikeln gefüllte Polymere oder sogenannte "Ormolytes", anorganisch-organische Hybridpolymere, die über Hydrolyse- und Polykondensationsprozesse hergestellt werden. Polymerelektrolyte sind besonders interessant aufgrund ihrer geringen Herstellungskosten und der Möglichkeit, auslaufsichere und mechanisch flexible EC-Elemente zu konzipieren. Unterschiedliche Zusammensetzungen wurden hier vorgeschlagen, wobei die meisten auf kommerziell erhältlichen Polymeren wie Ethylenoxid-Polymeren (PEO), Poly(methylmethacrylat) (PMMA), Poly(vinylidenfluorid) (PVDF) oder Cellulose basieren. Zwar wurden die Arbeiten auf dem Gebiet der Elektrolyte in den letzten Jahren vorangetrieben, jedoch sieht man sich nach wie vor Herausforderungen bezüglich der elektrochemischen, thermischen und UV-Stabilität gegenübergestellt. Zudem muss der Elektrolyt an die eingesetzten aktiven Schichten angepasst werden und für die Verwendung in flexiblen Vorrichtungen exzellente Flexibilität und Prozessierbarkeit aufweisen.

Das aktive, also farbgebende Material der AE kann anorganischer oder organischer Natur sein und dabei aus einem keramik- oder polymerartigen Werkstoff bestehen. Die prominentesten Beispiele sind das kathodisch färbende Wolfram(VI)oxid sowie kathodisch färbende PEDOT-Varianten.

Das aktive, also ionenspeichernde und ggf. ebenfalls farbgebende Material der GE kann ebenso anorganischer oder organischer Natur sein. Es sind viele Ionenspeichermaterialien bekannt, die sich prinzipiell eignen, wie beispielsweise gemischtvalentes Nickel(II,III)oxid oder Hexacyanoferratkomplexe wie Preußisch Blau (PB), aber auch manche Polymere wie Polycarbazole. Eher indifferent verhalten sich dagegen Materialien wie Cer(IV)oxid und besonders Titanmischoxide ($TiCeO_x$, $TiVO_x$), die lediglich geringe Färbeeffizienz aufweisen. Auch in Li-Ionenbatterien eingesetzte Materialien, wie Li-Titanate und Li-Manganate stellen effektive Speichermaterialien mit geringer Färbeeffizienz dar, sofern sie in Form transparenter Dünnfilme dargestellt werden können. Oxidische Ionenspeichermaterialien werden üblicherweise physikalisch über Sputterverfahren oder nasschemisch über Sol-Gel-Verfahren mit nachfolgender thermischer Verdichtung abgeschieden. In beiden Fällen werden die Substrate hohen Temperaturen ausgesetzt, was einen Einsatz auf Kunststofffolien (und somit in flexiblen EC-Elementen) erschwert, wenn nicht unmöglich macht. Einen Ausweg bieten die Hexacyanoferrate, die sich bei niedriger Temperatur galvanisch oder aus Nanopartikelsuspensionen abscheiden lassen. Auch bestimmte Oxide, wie das Vanadium(V)oxid lassen sich nasschemisch bei niedriger Temperatur darstellen, siehe M. Hajzeri et al., Solar Energy Materials and Solar Cells 99 (2012), S.62-72.

A. J. Widjaja et al. haben in Solar Energy Materials & Solar Cells, 92 (2008) 97-100 über eine Methode zur Herstellung flexibler EC-Elemente berichtet, wobei mindestens eine Komponente über ein R2R-Verfahren hergestellt wird. Jedoch berichten diese Autoren über den Nutzen von R2R-Verfahren in diesem Zusammenhang nur in allgemeiner Weise. Als einziges Beispiel wird die Abscheidung von $WO_3$ angegeben. U. Posset et al. haben in WO 2013/041562

A1 eine Methode zur skalierbaren Herstellung eines kompletten flexiblen EC-Elementes über R2R-Verfahren auf Basis von seitenketten-modifizierten PEDOT-Derivaten mit hoher Helltransmission und Polymerelektrolyten offenbart. Zuvor wurde von Granqvist et al. in Thin Solid Films 442, (2003) 201-211 über gesputtertes $WO_3$ und $NiO_x$ enthaltende Folienelemente berichtet, eine Technologie, die seit einigen Jahren von dem schwedischen Unternehmen Chromogenics AB unter dem Namen ConverLight™ vermarktet wird. Darüber hinaus existieren eine Reihe von Veröffentlichungen über Entwicklungen, die jedoch nicht über den Labormaßstab hinaus gekommen sind, so z.B. ein hybrides $WO_3$-Polyanilin-System, (siehe Marcel and Tarascon, Solid State Ionics 143, (2001) 89-101), eine flexible Folie mit Polyanilin und einem Poly(3,4-ethylendioxythiophen)-Poly(styrolsulfonsäure)-Copolymer als aktiven Materialien (siehe L.-M. Huang et al., Electrochimica Acta 51 (2006) S. 5858-5863) und ein "all-PEDOT"-Element, welches von C. Pozo-Gonzalo et al. für die optische Abschwächung im NIR-Bereich vorgeschlagen wurde, siehe Sol. Energy Mater. Sol. Cells 92, (2008) 101-106. Diese Systeme zeigen allesamt nur geringe optische Kontraste und geringe Helltransmission. Erwähnt werden kann auch ein flexibles EC-Folienelement, das aus dem elektrochromen Polymer Poly(3,4-(2,2-dimethylpropylen-dioxy)thiophen) ("PProDOT-$Me_2$") und einem galvanisch abgeschiedenen $V_2O_5$-$TiO_2$-Mischoxid aufgebaut ist und für einen Einsatz in Sonnenbrillen vorgeschlagen wurde, siehe C. Ma et al., Electrochimica Acta, 54, (2008) 598-605, US 2009/0052006 A1 und US 2008/0239452 A1. Der in diesem System verwendete Flüssigelektrolyt und die mangelnde Skalierbarkeit sowie die mäßige Helltransmission stehen einer technologischen Umsetzung jedoch im Wege. In allen diesen Entwicklungen kommt kommerziell erhältliche PET-ITO Folie mit Schicht- bzw. Flächenwiderständen von minimal 50 Ohm (die Einheit wird auch in Ohm pro Fläche, d.h. Ohm/□ angegeben) zum Einsatz.

Der bis 2009 bzw. bis 2010 verfügbare Stand der Technik wurde von A. Pawlicka in Recent Patents on Nanotechnology 3, (2009) p. 177-1819 und von R. Baetens et al. in Sol. Energy Mater. Sol. Cells 94, (2010) 94-105 umfassend beschrieben. In den Jahren seither sind den Erfindern keine grundlegend neuen Entwicklungen im Hinblick auf flexible EC-Folienelemente zur Kenntnis gelangt.

Die dem vorgenannten Stand der Technik entsprechenden Technologien erlauben die Herstellung von flexiblen EC-Elementen mit mittelmäßigem bis gutem Leistungsverhalten. Diese erfüllen jedoch die für eine Integration in Automobilverglasungen geltenden Mindestanforderungen hinsichtlich Helltransmisson, Kontrast, diffuser Lichtstreuung, Sicherheit, Verarbeitbarkeit und Schaltzeit nicht.

Einen vielversprechenden, neuen Materialtypus stellen die sogenannten supramolekularen Metallo-Polyelektrolyte (MEPE) dar, Übergangsmetall-Polypyridyl-Komplexe, die über metallioneninduzierten Selbstaufbau in Form linearer Ketten hergestellt werden können. In Figur 2 ist die Bildung metallo-supramolekularer Polyelektrolyte (MEPE) (2) durch Selbstaufbau ("self-assembly") von Metall(II)-Ionen und Bis-Terpyridin-Liganden (1) dargestellt. Hierfür werden mehrzähnige Chelatliganden wie z.B. Terpyridin oder Tetra-2-pyridyl-1,4-pyrazin (TPPZ) als Liganden eingesetzt, die sowohl chemisch als auch thermisch stabil sind und hohe Bindungskonstanten aufweisen, was zur Ausbildung von makromolekularen Assemblagen führt. Diesbezüglich sei auf die Veröffentlichung von C. A. da Silva et al., Langmuir 2012, 28, 3332-3337 verwiesen.

Metallopolymere wie oben beschrieben werden zunehmend auch für einen Einsatz in elektrochromen Anwendungen interessant, wie man z.B. dem Artikel von G. R. Whittell et al. in Nat. Mater. 2011, 10, 176-188 entnehmen kann. In diesem Kontext besonders hervorzuheben sind die Bipyridin-Komplexe der allgemeinen Formel $[M(bipy)_3]^{2+}$, mit M = Fe (rot), Ru (rotorange-hellgrün), Os (grün); bipy = 2, 2'-Bipyridin, die eine intensive *Metal-ligand charge transfer* (MLCT)-Bande zeigen, die bei Oxidation des Metall-Ions zu $M^{3+}$ verschwindet. Viele Metallo-Polymere zeigen je nach Ladezustand polyelektrochrome Eigenschaften.

Higuchi et al. haben in J. Inorg. Organomet. Polym. Mater., 19 (2009) 74-78 über MEPE-basierte EC-Elemente berichtet. Diese Technologie ist allerdings nur im Labormaßstab umsetzbar und nicht skalierbar.

In der Patentliteratur finden sich weitere Schriften, die MEPE-basierte Materialien und darauf aufbauende, elektrochrome Elemente beschreiben. Diesbezüglich sei auf US 2014/009812 A1,1 US 2013/201550 A1, EP 2618210 A1, US 8,378,062 B2, EP 2535767 A1, US 2012/307341 A1, WO 2012/093547 A1; US 20127127554 A1; EP 2444839 A1; WO 2011/096386 A1; US 7;923;530 B2; WO 20107147017 A1; US 20097270589 A1; WO 20087143324 A1; WO 20087081762 A1, WO 2007/049371 A1, JP 5013365 B2, JP 5013366 B2, JP 5062711 B2, JP 5062712 B2, JP 5092140 B2, JP 2007-112769 A, JP2007-112957 A, JP2008-162967 A, JP 2008-162976 A und JP 2008-162979 A verwiesen. Aus allen diesen Schriften ergibt sich als klarer Nachteil, dass keine ladungsspeichernde Gegenelektrode (wie z. B. Metalloxide oder Metallhexacyanometallate) zum Einsatz kommt, sondern lediglich die primär als Stromableiter ("Transparente Elektrode") eingesetzte ITO-Schicht diesem Zweck dient. Ein solcher Aufbau ist nachweislich nicht zyklenstabil, da solche ITO-Schichten unter den vorliegenden Bedingungen nicht reversibel Ladung speichern können. Ungeeignet für viele Anwendungen sind auch die verwendeten "gelförmigen" Elektrolyte, die aus einem flüssigen Elektrolyten ($LiClO_4$ in Acetonitril (toxisch) oder Propylencarbonat) bestehen, der lediglich angedickt wird.

Es existieren auch anodisch färbende MEPEs. Solche MEPEs wurden beispielsweise von Hossain, Sato und Higuchi in Chem. Asian J. 2013, 8, 76 - 79 beschrieben.

Die Aufgabe der vorliegenden Erfindung liegt in der Bereitstellung eines vorzugsweise flexiblen oder teilflexiblen elektrochromen Elements mit verbesserten mechanischen Eigenschaften. Vorzugsweise eignet sich dieses zur Integration in Verglasungen und erfüllt dafür wesentliche automobile Anforderungen wie kurze Schaltzeiten wie oben als wünschenswert angegeben, hohe Helltransmission (vorzugsweise von mindestens 70% nach DIN E 410) und einen ausreichenden Transmissionshub, um Blickdichtheit zu gewährleisten. Letzterer sollte vorzugsweise einen Wert von mindestens 50%, stärker bevorzugt mindestens 60% und idealerweise 70% oder sogar darüber haben. Dabei ist der Aspekt der Integration der Zelle in eine Verglasung bedeutsam. Er bedingt neben der Einlaminierung einer Folienzelle auch hybride Bauweisen, wie die Kaschierung von Halbzellen mit verschiedenen Basismaterialien, weshalb die Aufgabe auch in der Bereitstellung von Verfahrensschritten zu sehen ist, die zur Erzeugung entsprechender elektrochrom wirksamer Verbundgläser führen.

Die Ausdrücke "Verglasungen", "Scheiben", "Substrate" und dergleichen sind erfindungsgemäß, wie dem Fachmann ohne weiteres aus den allgemeinen und spezifischen Ausführungen erkennbar, keinesfalls auf Elemente beschränkt, die Scheiben aus Glas aufweisen, sondern umfassen Elemente mit lichtdurchlässigen, flexiblen oder starren Scheiben aus beliebigen Materialien, insbesondere aus Kunststoffen sowie Verbundmaterialien/Verbundgläsern.

Gelöst wird die Aufgabe der Erfindung durch die Bereitstellung eines elektrochromen Elements, auch als "elektrochrome Zelle" zu bezeichnen, mit den folgenden Komponenten:

einem ersten und einem zweiten, vorzugsweise flächigen Substrat, die jeweils transparent für sichtbares Licht sind und auf ihrer nach innen weisenden Seite jeweils eine elektrisch leitende Oberfläche besitzen,

einer schichtförmigen Arbeitselektrode, die in Kontakt mit der elektrisch leitenden Oberfläche eines ersten der beiden Substrate steht und eine Metall-Komplexverbindung aufweist, die in der Lage ist, eine Redoxreaktion einzugehen, wobei der Übergang vom oxidierten in den reduzierten Zustand mit einer Farbvertiefung und der Übergang vom reduzierten in den oxidierten Zustand mit einer entsprechende Farbabschwächung einhergeht ("kathodisch färbende" Metall-Komplexverbindung),

einer Elektrolytschicht, die sich zwischen der Arbeitselektrode und der Gegenelektrode befindet und bewegliche Metallkationen sowie in der Regel bewegliche Anionen enthält,

einer zwischen dem Elektrolytmaterial und der leitenden Beschichtung des zweiten Substrats befindlichen Gegenelektrode, die in der Lage ist, bewegliche Kationen des Elektrolytmaterials zu interkalieren und/oder eine Redoxreaktion einzugehen, wobei das Material der zweiten Elektrode beim Übergang vom oxidierten in den reduzierten Zustand keiner Farbvertiefung im Wellenlängenbereich der Farbvertiefung der Metall-Komplexverbindung und vorzugsweise gar keiner Farbvertiefung unterliegt, gegebenenfalls aber "anodisch färbend" ist, also einer Farbvertiefung beim Übergang vom reduzierten in den oxidierten Zustand unterliegt.

dadurch gekennzeichnet, dass die Elektrolytschicht ein transparenter, flexibler Film ist und mindestens die folgenden Komponenten aufweist:

(a) ein vernetzbares hybrides Prepolymer

(b) ein vernetzbares organisches Monomer oder Prepolymer, auch als Reaktivverdünner bezeichnet,

(c) ein nicht vernetzbares, organisches Polymer und

(d) ein dissoziierbares Salz, dessen anorganische Kationen sich bei Vorhandensein einer Ladungsdifferenz zwischen der Arbeitselektrode und der Gegenelektrode zwischen diesen Elektroden bewegen können.

Die Schicht kann optional weiterhin die folgenden Komponenten aufweisen:

(e) ein Lösemittel oder ein Lösemittelgemisch und/oder

(f) eine Nanopartikelzubereitung.

Das Polymerelektrolyt-Material wird durch Vermischen der vorgenannten Komponenten und anschließendes Vernetzen der Prepolymere synthetisiert, wobei die Komponenten (a), (b) und (c) in flüssiger oder pastöser Form vorliegen.

Der Ausdruck "Farbvertiefung" wird erfindungsgemäß verwendet, um eine Intensitätserhöhung der Farbe (eine Erhöhung der Farbtiefe) zu bezeichnen, nicht aber eine Farbverschiebung zu größeren Wellenlängen (Bathochromie). Der Ausdruck "Farbvertiefung" bildet mit dem Ausdruck "Farbabschwächung" daher ein Begriffspaar.

Das vernetzbare hybride Prepolymer (a) enthält in der Regel ein anorganisches Netzwerk mit oder aus (Halb-)Metall-Sauerstoff-(Halb-)Metall-Bindungen (Si-O-Si-Bindungen und/oder Si-O-Metall-Bindungen und/oder Metall-O-Metall-Bindungen) sowie organische Komponenten und ist vorzugsweise ein anorganisch-organisches Hybridpolymer ("ORMOCER®"), welches anorganisch kondensierte Si-O-Si-Bindungen aufweist und damit als Organo(hetero)polysiloxan oder organisch modifiziertes Kieselsäure(hetero)polykondensat anzusehen ist bzw. bezeichnet wird. Dabei wird ein Hybridpolymer, das weiterhin in das anorganische Netzwerk eingebaute Metallkationen M wie Al, Zr, Ti oder Ta aufweist, als Organoheteropolysiloxan bzw. organisch modifiziertes Kieselsäureheteropolykondensat bezeichnet, und ein Hybridpolymer ohne solche Metallkationen als Polysiloxan/Kieselsäurepolykondensat. Die Siliciumatome dieses Netzwerks weisen in der Regel organische Gruppen auf, die über Si-C-Bindungen ins Netzwerk eingebaut sind und daher bei der das Netzwerk bildenden Kondensationsreaktion der hierfür als Ausgangsmaterial eingesetzten Silane am Silicium gebunden bleiben. Dabei umfasst der Begriff "anorganisch-organische Hybridpolymere" auch sogenannte Oligosilsesquioxane und kubische oligomere Silsesquioxane (POSS).

Zur Herstellung der Hybridpolymere geht man üblicherweise von geeignet modifizierten Silanen oder silanhaltigen Ausgangsmaterialien mit hydrolytisch kondensierbaren Resten wie Alkoxygruppen oder Halogenen oder mit Hydroxygruppen aus, die durch Polykondensationsprozesse in ein anorganisches Netzwerk überführt werden. Dies ist dem Fachmann durch eine Vielzahl von Publikationen geläufig. Hierfür wird in vorteilhafter, aber nicht notwendiger Weise der bekannte Sol-Gel-Prozess eingesetzt. Wenn die oder ein Teil der über Kohlenstoff an Siliciumatome gebundenen organischen Gruppen organisch vernetzbar ist, also beispielsweise eine organisch polymerisierbare C=C-Doppelbindung (Beispiel: Methacrylgruppen, Acrylgruppen, insbesondere die entsprechenden (Meth-)Acrylatgruppen; Norbornengruppen) oder eine unter Ringöffnung polymerisierbare Gruppe (Beispiel: Epoxidring) aufweist, so erfolgt optional in einem zweiten Schritt eine entsprechende organische Vernetzung unter Ausbildung eines organischen Netzwerks oder von organischen, zwei oder mehr Siliciumatome verbrückenden Gruppen. Eine solche organische Vernetzung kann vor dem Auftrag der Elektrolytschicht bewirkt werden, erfolgt aber meist erst danach. Damit ergibt sich das besondere und bevorzugte Charakteristikum, dass die organischen und die anorganischen Bestandteile über kovalente Si-C-Bindungen miteinander verknüpft sind und die organischen Bestandteile optional durch z.B. UV- oder thermische organische Vernetzungsreaktionen wie Polymerisationen von C=C-Doppelbindungen unter Ausbildung propagierender Kohlenstoffketten oder eine Epoxidpolymerisation verknüpft werden können bzw. verknüpft worden sind. Die genannte Hybridpolymerkomponente (a) dient vornehmlich der Verbesserung der Haftungseigenschaften und der UV-Stabilität der Elektrolytschicht. Außerdem trägt sie dazu bei, eine mögliche, durch die Vernetzung auftretende Schrumpfung zu minimieren und kann genutzt werden, um den Brechungsindex anzupassen.

Das vernetzbare, organische Monomer oder Prepolymer (b), das auch als Reaktivverdünner bezeichnet wird, ist in der Lage, eine Polymerisationsreaktion einzugehen. Hierfür besitzt es mindestens zwei organisch polymerisierbare Gruppen pro Molekül, z.B. UV- oder thermisch vernetzbare Gruppen. Besonders bevorzugt sind Gruppen, die C=C-Doppelbindungen enthalten, wie beispielsweise Vinyl-, Acrylat-, Methacrylatgruppen, oder Epoxygruppen. Vorzugsweise weist das Monomer oder Prepolymer (b) ein oder mehrere lineare oder verzweigte Polyethersegmente auf. Diese Polyethersegmente enthalten stärker bevorzugt monomere Einheiten $-O-CH_2CHR-$, wobei R = H oder Alkyl mit vorzugsweise 1 bis 6 Kohlenstoffatomen, insbesondere H oder $CH_3$ bedeutet. In besonders bevorzugten Ausführungsformen sind die organisch polymerisierbaren Gruppen so gewählt, dass sie mit organisch vernetzbaren Gruppen des vernetzbaren hybriden Prepolymers (a) copolymerisieren können. In diesen Fällen kann das vernetzbare, organische Monomer oder Prepolymer (b) dieselben organisch vernetzbaren Gruppen aufweisen wie das eingesetzte Hybridpolymer (a), beispielsweise mindestens zwei Acrylat- oder Methacrylatgruppen pro Molekül. Alternativ ist eine Polymerisation in Form einer Polyadditionsreaktion wie einer Thiol-En-Addition oder einer Polykondensationsreaktion möglich. In diesen Fällen kann das vernetzbare, organische Monomer oder Prepolymer (b) beispielsweise mindestens zwei Thiolgruppen aufweisen. Das Monomer oder Prepolymer (b) ist hilfreich für die Verarbeitung des Elektrolyten und dient der Erreichung einer gewissen Flexibilität.

Das nicht vernetzbare, organische Polymer (c) besitzt die Eigenschaften eines Thermoplasten. Dessen Zusammensetzung ist dem Grunde nach beliebig. Vorzugsweise wird das Polymer aus der Gruppe der Polyacrylate, Acrylatesterpolymerisate oder Polyether ausgewählt, oder es ist oder enthält ein Copolymeres, das (Poly-)Acrylat, ein Acrylatesterpolymerisat und/oder einen Polyether enthält. Rein beispielhaft seien Poly(methylmethacrylate), Ethylmethacrylat-Methylacrylat-Copolymere sowie Poly(propylenoxid-ethylenoxid)-Copolymere genannt. Erfindungsgemäß wird ein Polymer bevorzugt, welches im thermischen Anwendungsbereich (der von etwa -25°C bis 80°C reicht) weder kristallisiert noch nennenswert erweicht, bei Temperaturen und Drucken, wie sie bei Autoklavierprozessen vorkommen (ca. 120-150°C bzw. 10-18 bar), jedoch eine thermoplastische Erweichung zeigen kann. So kann sichergestellt werden, dass während der Anwendung ausreichende mechanische Stabilität gewährleistet ist und bei der Herstellung des elektrochromen Elements oder bei dessen Verarbeitung unter Ausbildung eines Gegenstands, beispielsweise eines Fensterglases, gut definierte Grenzflächen (und somit gute Zwischenschichthaftung und geringe Grenzflächenwiderstände) erhalten werden.

Das dissoziierbare Salz (d), dessen anorganische Kationen sich bei Vorhandensein einer Ladungsdifferenz

zwischen der Arbeitselektrode und der Gegenelektrode zwischen diesen Elektroden bewegen können, ist vorzugsweise - insbesondere für den Fall, dass die Gegenelektrode Alkaliionen einlagern kann - ein Alkalimetallsalz oder ein Tetraalkylammoniumsalz. Das Salz hat die allgemeine Formel MX, wobei M ein einwertiges Kation wie Li, Na, K, Tetraalkyl-, insbesondere Tetrabutylammonium bedeutet und X ein Anion darstellt, das in der Umgebung des Elektrolytmaterials (den Komponenten (a) bis (c) und ggf. (e)) leicht abdissoziiert und in der Regel in dieser Umgebung ebenfalls beweglich ist. Solche Anionen sind dem Fachmann bekannt, sie umfassen insbesondere, aber nicht ausschließlich, $ClO_4^-$, $BF_4^-$, $PF_6^-$, $CH_3$-$COO^-$, $CF_3SO_3$ ("Triflat"), $CH_3$-$C_6H_4$-$SO_3^-$ (Tosylat"), Bis(oxalato)borat ($BOB^-$), Bis(trifluoromethylsulfonyl)imid ($TFSI^-$), (Fluoromethylsulfonyl)imid ($FSI^-$). Das Salz dient insbesondere dem erforderlichen Ladungstransport.

Das dissoziierbare Salz (d) wird in der Regel in einem Lösemittel oder Lösemittelgemisch (e) gelöst. Dieses enthält häufig, aber nicht notwendigerweise, eine hochsiedende Komponente oder besteht aus einem hochsiedenden Lösemittel. Unter "hochsiedend" ist dabei zu verstehen, dass die Komponente des Lösemittelgemischs oder das Lösemittel nicht unter 130°C, vorzugsweise nicht unter 160°C und ganz bevorzugt nicht unter 200°C siedet. Das Lösemittel kann neben seiner Aufgabe, die Auflösung des dissoziierbaren Salzes (d) zu bewirken, weitere Vorteile besitzen. So kann es in vielen Fällen die Benetzungseigenschaften verbessern und die ionische Leitfähigkeit des Elektrolytharzes erhöhen. Wenn es bzw. eine Komponente davon hochsiedend ist, agiert es insbesondere als Weichmacher. Hochsiedende Lösemittel oder hochsiedende Komponenten des Lösemittelgemischs werden vorzugsweise ausgewählt unter organischen Carbonaten, sogenannten "ionischen Flüssigkeiten", Pyrrolidonen, Lactonen, Sulfolanen und Polyethern sowie Mischungen zweier oder mehrerer dieser Stoffe untereinander. Es lässt sich auch ein Lösemittelgemisch einsetzen, das einen kleineren oder größeren Teil an einer hochsiedenden Komponente aufweist. Deren Anteil kann z.B. mindestens 10 Gew.-%, vorzugsweise mindestens 20 Gew.-% und häufig mindestens 50 Gew.-% betragen. Beispiele für organische Carbonate sind Ethylencarbonat, Propylencarbonat, Vinylcarbonat, Methylethylcarbonat, Dibutylcarbonat. Bevorzugt sind Propylencarbonat und Dibutylcarbonat. Beispiele für ionische Flüssigkeiten sind BMI-TFSI (1-Butyl-3-methylimidazolium-bis(trifluoromethylsulfonyl)imid) und NMP TFSI (N-Methyl-pyrrolidinium-bis(trifluoromethylsulfonyl)imid). Beispiele für Lösemittel, die im Sinne der Erfindung nicht hochsiedend sind, sind Alkohole, insbesondere Methanol und Ethanol, Ether, Ketone wie Aceton und dergleichen. Geeignet sind beispielsweise solche Lösemittel, wie sie für die Nanopartikelzubereitung (f) oder - optional - für die Herstellung des vernetzbaren hybriden Polymers (a) eingesetzt werden.

Das Vorhandensein von Lösemittel ist nicht unbedingt notwendig; wenn die Komponenten (a) bis (c) des Elektrolytmaterials in vernetztem Zustand selbst ionenleitend sind, kann auf dessen Präsenz gegebenenfalls auch verzichtet werden. In solchen Fällen wird das Salz entweder in einem im Sinne der Erfindung nicht hochsiedenden Lösemittel gelöst, welches im Laufe der weiteren Prozessierung der Komponenten wieder entfernt wird, beispielsweise während eines thermischen Vernetzungsschritts, oder der Mischung der Komponenten für den Polymerelektrolyten wird gar kein Lösemittel zugesetzt. In solchen Fällen kann allerdings immer noch Lösemittel in der Mischung vorhanden sein, z.B. als Komponente des Hybridpolymeren (a) oder der Nanopartikelzubereitung (f). Auch dieses Lösemittel bzw. dieses Lösemittelgemisch kann die Aufgabe des Lösemittels bzw. des Lösemittelgemischs gemäß (e) übernehmen; eine separate Zugabe davon kann dann überflüssig sein. In manchen Fällen, in denen das Vorhandensein von nicht-hochsiedendem Lösemittel nicht gewünscht ist, kann auch dieses Lösemittel während der Prozessierung wieder entfernt werden.

In bevorzugten Ausgestaltungen der Erfindung enthält die Elektrolytschicht nur einen sehr geringen Anteil an hochsiedendem Lösemittel, beispielsweise nicht mehr als 5 Gew.-%, vorzugsweise nicht mehr als 3 Gew.-% und besonders bevorzugt nicht mehr als 1,5 Gew.-%, bezogen auf das gesamte Material der Elektrolytschicht, und im Wesentlichen kein nicht hochsiedendes Lösemittel. "Im Wesentlichen" soll dabei bedeuten, dass möglicherweise vorhandenes nicht hochsiedendes Lösemittel mit üblichen Methoden wie Abdampfen und/oder Abziehen unter Unterdruck so weitgehend wie möglich aus der Mischung entfernt wurde.

Optional kann die erfindungsgemäß einsetzbare Elektrolytmischung mit modifizierten Nanopartikeln versetzt werden, wobei diese vorzugsweise so ausgewählt werden, dass sich der Transmissionsgrad der Mischung im Sichtbaren nicht maßgeblich ändert. Die Partikel können eine Oberflächenmodifizierung zur sterischen oder elektrostatischen Stabilisierung aufweisen. So können sie über eine Funktionalisierung kovalent an den Polymerelektrolyten gebunden werden. Dies gelingt beispielsweise, indem die Oberfläche der Nanopartikeln mit Silanen funktionalisiert wird, die die gleichen über Kohlenstoff an Silicium gebundenen Gruppen aufweisen wie das vernetzbare hybride Prepolymer, oder deren Gruppen mit solchen am Prepolymer gebundenen Gruppen copolymerisieren können. Entsprechende Techniken der Funktionalisierung sind dem Fachmann bekannt. Die Nanopartikelzubereitung verbessert in erster Linie die mechanischen Eigenschaften durch Verringerung des vernetzungsbedingten Schrumpfs. Sie besteht aus in einem Suspensionsmittel dispergierten Nanopartikeln aus Metalloxiden, aus Metallmischoxiden oder aus Mischungen von Metall(misch)oxiden. Beispiele hierfür, die nicht als beschränkend angesehen werden sollen, sind $SiO_2$, $TiO_2$, $Al_2O_3$, ZnO, $ZrO_2$, und $Ta_2O_5$ sowie deren Mischungen. Der Zusatz von Nanopartikeln erhöht die Dichte des Elektrolyten, der dadurch ganz allgemein viskoser, fester bzw. formstabiler wird und beim Trocknen/Vernetzen weniger schrumpft. Einige Oxide wie $TiO_2$ oder ZnO stellen effektive UV-Absorber dar, so dass sie die UV-Beständigkeit des Elektrolytmaterials positiv beeinflussen können. Die Primärpartikelgröße der Teilchen in der Suspension sollte in günstiger Weise im Bereich unter

100 nm, bevorzugt unter 20 nm liegen, um das Auftreten einer diffusen Lichtstreuung zu vermeiden.

Das Suspensionsmittel kann leichtflüchtig und somit nach Einbringung der Zubereitung in das Elektrolytharz entfernbar sein. Beispiele für solche Suspensionsmittel sind primäre Alkohole, z.B. Alkohole mit einer Kettenlänge von 1 bis 6 Kohlenstoffatomen. Alternativ besitzt es einen eher höheren oder hohen Siedepunkt. Im letzteren Fall sollte es, da es zumindest teilweise in der Elektrolytmischung verbleibt, elektrochemisch stabil sein und kann daher aus der Gruppe von Substanzen ausgewählt sein, die oben als hochsiedendes Lösungsmittel (d) angegeben sind. Beispiele sind organische Carbonate. Weiterhin können höhersiedende Alkohole (z.B. mit 7 bis 11 Kohlenstoffatomen) verwendet werden. Erfindungsgemäß können sowohl kommerziell erhältliche Suspensionen oder eigens für Elektrolytmischung zubereitete eingesetzt werden.

Den Erfindern ist es mit der Bereitstellung der oben näher erläuterten Elektrolytmischung gelungen, ein Material mit neuem und einzigartigem Eigenschaftsprofil bereitzustellen. Die technische Wirksamkeit der einzelnen Komponenten, die dabei eingesetzt wurden, wird in der nachstehenden Tabelle 1 näher erläutert. Daraus ergibt sich, dass durch den Einsatz des erfindungsgemäßen Elektrolyten eine Reihe von mechanischen Eigenschaften des elektrochromen Elements positiv beeinflusst wird.

**Tabelle 1.** Elektrolytkomponenten und deren Einfluss auf die Eigenschaften des Gesamtsystems.

| **Komponente** | **Zweck/Einfluss** |
|---|---|
| Hybridpolymer (a) | Haftung, UV-Stabilität |
| Reaktivverdünner (b) | Prozessierbarkeit, Elastizität |
| Organisches Polymer (c) | Klebrigkeit, mechanische Stabilität |
| Leitsalz (d) | Ladungstransport |
| Lösemittel (e) | Weichmacher, Leitfähigkeit |
| Nanopartikel (f) | Minimierung Schrumpf, UV-Stabilität |

Die Elektrolytschicht wird mit einer Dicke aufgetragen, die in einem Film mit einer Dicke von 1 bis 200 $\mu$m, vorzugsweise von 20 bis 100 $\mu$m resultiert.

Ein erfindungsgemäßes, insbesondere für ein flexibles, elektrochromes Folienelement geeignetes Elektrolytmaterial hat bevorzugt die folgende Zusammensetzung (in Gewichts%):

| | |
|---|---|
| Hybridpolymer (a) | 1 - 50 |
| Reaktivverdünner (b) | 1 - 80 |
| Organisches Polymer (c) | 1 - 80 |
| Lösemittel oder Lösemittelgemisch (d) | 0 - 80 |
| davon hochsiedend: | 0 - 80 |
| Leitsalz (e) | 1 - 20 |
| Nanopartikelzubereitung (f) | 0 - 20 |

Besonders bevorzugt besitzt das Elektrolytmaterial die folgende Zusammensetzung (in Gewichts%):

| | |
|---|---|
| Hybridpolymer (a) | 5-15 |
| Reaktivverdünner (b) | 10-25 |
| Organisches Polymer (c) | 5-40 |
| Lösemittel oder Lösemittelgemisch (d) | 1 - 50 |
| davon hochsiedend: | 1 - 50 |
| Leitsalz (e) | 5 - 15 |
| Nanopartikelzubereitung (f) | 0 - 10 |

Es hat sich im Rahmen der Erfindung als günstig herausgestellt, dass die erfindungsgemäß einsetzbare schichtförmige Arbeitselektrode eine solche ist, die in Kontakt mit der leitenden Beschichtung eines der beiden Substrate steht und eine Metall-Komplexverbindung aufweist, die in der Lage ist, eine Redoxreaktion einzugehen, wobei der Übergang vom oxidierten in den reduzierten Zustand mit einer Farbvertiefung und der Übergang vom reduzierten in den oxidierten Zustand mit einer entsprechenden Farbabschwächung einhergeht. Diese elektrochromen Eigenschaften lassen sich

dabei durch den Einsatz von geeigneten Komplexverbindungen mit verschiedenen Übergangsmetallionen erzielen. In günstiger Weise handelt es sich dabei um Verbindungen mit chelatisierenden Komplexliganden, die Metallatome z.B. über zwei oder mehr Stickstoff-, Sauerstoff- oder Schwefelatome binden können. Besonders bevorzugt ist die Verwendung von Liganden, die zwei oder, vorzugsweise, drei bindungsfähige Stickstoffatome mit verfügbarem Elektronenpaar enthalten, beispielsweise eingebunden in entsprechende aromatische Heteroringe wie Pyridin, Pyrimidin, Indolizin, Imidazol, Pyrazol, Oxazol, Isoxazol, Thiazol oder Isothiazol sowie deren Benzokondensate wie Benzimidazol oder Benzoxazol. Diese können beliebig kombiniert werden, beispielsweise zu den Liganden Bis-(benzimidazolyl)pyridin, Bis-(benzoxazolyl)pyridin, in denen u.a. der Pyridin-Rest entweder unsubstituiert bleibt oder beliebig, z.B. mit OH oder Halogen, substituiert sein kann, oder zu einem optional, z.B. mit Halogen (z.B. mit Bromid), Alkyl, Alkoxy (insbesondere Methoxy), Hydroxy, Nitro oder Aminophenyl, substituierten Terpyridin. Über die Variabilität dieser Liganden lässt sich eine breite Farbpalette erhalten. Die prinzipiell komplexierbaren Metallkationen sind in der Regel Übergangsmetallkationen, sie werden für die vorliegende Erfindung vorteilhaft in Hinblick auf ihr Redoxpotential ausgewählt, wie weiter unten genauer dargestellt.

Beispiele für Metallkomplexe mit dem Chelatliganden Bis(benzimidazol-2-yl)pyridin-Rest sind Fe-(2,6-Bis(benzimidazol-2-yl)-pyridin)$_2$ (bbip (X=H)) und Fe-(2,6-Bis(benzimidazol-2-yl)-4-hydroxypyridin)$_2$ (bbip (X=OH)), Beispiele für Metallkomplexe mit Terpyridyl-Liganden sind Fe-(4'-chloro-2,2':6',2"-terpyridin)$_2$ und Fe-(4'-(4-aminophenyl)-2,2':6',2"-terpyridin)$_2$.

In einer spezifischen Ausführungsform kann der Komplexligand zwei Terpyridylgruppen aufweisen, die über eine Einfachbindung oder einen Spacer miteinander verbunden sind. Der Vorteil dieser Liganden liegt darin, dass sie beidseitig Metallatome komplexieren können, wobei die Metallatome ihrerseits von zwei Terpyridyl-Gruppen umgeben sein können, sodass eine Art Kettenpolymer entsteht. Solche Terpyridin-Liganden sind aus der Literatur bekannt (siehe z.B. US 2009/0270589, EP 2 444 839 A1 oder WO 2008/143324 A1); sie können polymerartige Koordinationsverbindungen mit den oben erwähnten Metallionen, insbesondere mit Fe, Co, Ni, Zn oder Ru eingehen, wie anhand des in **Figur 2** dargestellten Terpyridin-Komplexes gezeigt.

Beispiele sind in der nachstehenden **Tabelle 2** gezeigt.

| MEPE | Ligand | Metall-Ion |
|---|---|---|
| Fe-MEPE-L0 (siehe Beispiele) | 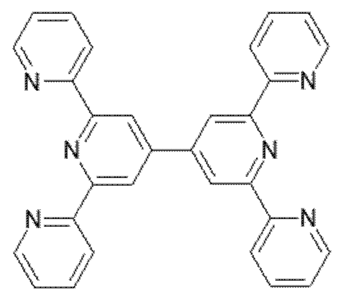 tpy-tpy | Fe(II) |
| Fe-MEPE-L1 (siehe Beispiele) | 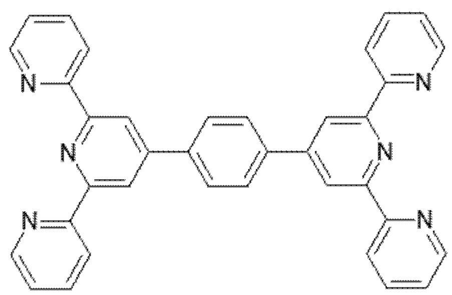 tpy-ph-tpy | Fe(II) |

(fortgesetzt)

| MEPE | Ligand | Metall-Ion |
|---|---|---|
| Fe-MEPE-L2 | 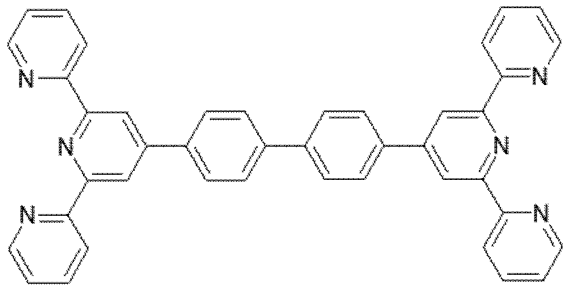 tpy-$ph_2$-tpy | Fe(II) |

Die genannten Komplexe fallen unter die oben angegebene Definition der MEPEs. Die MEPEs sind in wässrigen und alkoholischen Medien löslich und luft- und hydrolysestabil. Durch geeignete Auswahl an Liganden und Metall-Ionen lassen sich ihre optischen und elektrochemischen Eigenschaften variieren.

Im Rahmen der vorliegenden Erfindung wurde nun überraschend gefunden, dass sich einige solcher MEPE-Dünnschichten durch die Kombination von hoher mechanischer Flexibilität, hoher Färbeeffizienz, kurzer Schaltzeit und hoher visueller Transmission im Hellzustand auszeichnen, was sie besonders für einen Einsatz in elektrochromen Automobilverglasungen prädestiniert. Darüber hinaus wurde gefunden, dass sich MEPE bei niedriger Temperatur verarbeiten lassen, so dass insbesondere auch der Einsatz von organischen Basismaterialien (Folie oder Kunststoffplatten) möglich wird. Zudem konnte gezeigt werden, dass sich die Breite der Absorptionsbande und so der Transmissionshub erhöhen lassen, wenn mehrere MEPE mit sich ergänzenden Absorptionseigenschaften entweder in einer Schicht gemischt oder in Form zweier separater Schichten aufgebracht werden. Higuchi et al. haben zwar bereits 2009 über MEPE-basierte EC-Elemente berichtet [M. Higuchi et al., J. Inorg. Organomet. Polym. Mater., 19 (2009) 74-78], vernachlässigen allerdings die zur Erreichung hoher Zyklenfestigkeit zwingende Notwendigkeit, eine Ionenspeicherschicht einzusetzen. Diese Technologie ist darüber hinaus nur im Labormaßstab umsetzbar und nicht skalierbar.

Die Färbeeffizienz, also die Differenz zwischen der Absorption im reduzierten und der Absorption im oxidierten Zustand des entsprechenden Materials in Abhängigkeit von der für die Farbänderung benötigten Ladung, ist ein quantitatives Maß für die elektrochemisch hervorgerufene Farbe. Sie wird definiert durch den Quotient des Logarithmus der Änderung der optischen Dichte zur benötigten Ladung. Sie wird jeweils für eine spezielle Wellenlänge angegeben und lässt sich durch die nachstehende Formel (1) darstellen,

$$E = \frac{\log\left(\frac{\tau_{ch}}{\tau_{dis}}\right)}{C_{ch}} \qquad (1)$$

worin $\tau_{ch}$ die spektrale Transmission im geladenen Zustand, $\tau_{dis}$ die spektrale Transmission im ungeladenen Zustand und $C_{ch}$ die für die Farbänderung benötigte Ladung bedeuten. Aus der Formel geht hervor, dass die Färbeeffizienz ein Parameter ist, der als solcher unabhängig von der Schichtdicke definiert ist, über die für die Farbänderung benötigte Ladungsmenge jedoch mit der Dicke der Schicht verknüpft ist.

Die Metall-Komplexverbindung der Arbeitselektrode kann einen oder mehrere chelatisierende Komplexliganden sowie eine oder mehrere verschiedene Arten von Metallkationen aufweisen, wobei die Metallatome ihrerseits von einem oder zwei Terpyridyl-Gruppen umgeben sein können, so dass ein hochmolekulares Kettenpolymer entsteht.

Für die Auswahl von erfindungsgemäß geeigneten Metallkationen ist zu beachten, dass diese formal in mindestens zwei Oxidationsstufen existieren können müssen, wobei sich die optischen Eigenschaften der Komplexe (d.h. vor allem die Intensität der Charge-Transfer-Banden) abhängig von der jeweiligen Oxidationsstufe unterscheiden müssen. Um energieeffiziente elektrochrome Fenster herstellen zu können, sollte die Zellspannung vorzugsweise im Bereich von 0,1 - 3 V, stärker bevorzugt im Bereich von 0,1 - 1,6 V liegen.

Erfindungsgemäß können Komplexe eines oder mehrerer Übergangsmetallkationen, ausgewählt unter Cr, Mn, Fe, Co, Ni, Cu, Mo, Ru, Rh, Pd, eingesetzt werden, wobei Mn, Ru, Fe und Co zu bevorzugen sind, darunter ganz besonders Fe. Fe ist deshalb besonders bevorzugt, weil es sich durch die günstige Lage des Schaltpotentials und einen hohen Farbkontrast auszeichnet und eisenhaltige Komplexe der vorgenannten Art eine besonders hohe Zyklenfestigkeit

aufweisen.

Es können je nach Bedarf ein einzelner Komplexligand in Kombination mit einer einzelnen Art Metallkation, ein einzelner Komplexligand mit zwei oder mehr Metallkationen-Arten, eine Mischung von zwei oder mehr Komplexliganden mit nur einer Art Metallkation sowie eine Mischung von zwei oder mehr Komplexliganden mit einer Mischung von zwei oder mehr Metallkationen-Arten eingesetzt werden. Eisen als Metallion in Kombination mit einer Mischung aus zwei oder mehr verschiedenen chelatisierenden Komplexliganden ist bevorzugt, wobei die Komplexliganden besonders bevorzugt jeweils mindestens einen aromatischen Heteroring aufweisen. Hierdurch lässt sich eine nochmals gesteigerte hohe Variabilität an Farben und Farbtönungen, darunter auch grau oder braun, sowie eine hohe Variabilität der möglichen Schaltpotentiale erreichen.

Die Verwendung von Terpyridyl-Liganden in Kombination mit Fe- und Ru-Kationen ist bevorzugt, wobei die Metallatome ihrerseits vorzugsweise von einem oder von zwei Terpyridylgruppen umgeben sind.

Um ein möglichst breites, reversibel schaltbares Absorptionsverhalten zu erreichen, können mehrere Komplexe, deren Absorptionsmaxima für den Elektronenübergang von Metall auf Ligand ("metal-to-ligand charge-transfer", MLCT-Banden) bei geringfügig unterschiedlichen Wellenlängen liegen, gemischt werden.

Die Schaltbarkeit bei ähnlichem Redoxpotential solcher Mischungen wird dadurch erreicht, dass ein Metallkation, z.B. $Fe^{2+}$, stets in ähnlicher, aber nicht identischer koordinativer Umgebung vorliegt (z.B. verzerrt oktaedrisch von 6 Stickstoff-Atomen umgeben). Umgekehrt kann bei der Verwendung verschiedener Metallkationen ein ähnliches Redoxpotential durch die Komplexbildung der verschiedenen Kationen mit (nur) einem geeigneten Liganden erreicht werden. Die Farbe des Komplexes hängt vom verwendeten Metallkation und vom Liganden ab. Einen entscheidenden Einfluss auf die Farbigkeit der Metall-Komplexe üben außerdem Substituenten an den Liganden aus. Der Einfluss beruht auf den elektronenziehenden bzw. -schiebenden Effekten der Substituenten. Die Lage der Absorptions-Bande zeigt den Trend, dass eine stärkere bathochrome Verschiebung der Bande auftritt, je geringer die Elektronendichte am Donoratom ist.

Um eine Schaltung der elektrochromen Zellen von vorbestimmten Farben nach farblos zu erzeugen, können entweder Komplexe aus einer spezifischen Metall-Ligand-Kombination eingesetzt werden, oder es können Mischkomplexe, z.B. aus verschiedenen Metallen mit einem Liganden, oder aus verschiedenen Metallen und verschiedenen Liganden, oder aus einem Metall und verschiedenen Liganden, eingesetzt werden. Durch die Kombination eines oder mehrerer Metalle und eines oder mehrerer Liganden kann man aber auch unterschiedliche Farben erzeugen. Somit lässt sich die Farbpalette erweitern und ein breiter Absorptionsbereich erzielen. Durch Mischen sollte letztlich jeder Farbton erreichbar sein.

Vorzugsweise enthält die Arbeitselektrode weiterhin ein transparentes Bindemittel, auch als Einbettungsmaterial bezeichnet. Dieses fungiert dabei als Matrix für die oben beschriebenen Komplex-Verbindung(en). Dabei ist es wichtig, dass die Matrix derart optimiert ist, dass trotz der relativ guten Löslichkeit des oder der Metall-Komplexe in Lösungsmitteln dennoch eine ausreichende Fixierung der Metall-Ionen gewährleistet ist. Als Bindemittel können Polymere mit guten Filmbildungseigenschaften dienen, die eine gewisse Ionenleitfähigkeit besitzen. Hierzu zählen beispielsweise Polyacrylate. Als besonders gut geeignet haben sich acrylat-funktionelle, anorganisch-organische Hybridpolymere (Organopolysiloxane) erwiesen, wie sie in der noch nicht veröffentlichten Anmeldung EP 14 185 797.9 beschrieben sind. Sehr günstig ist es, wenn das Einbettungsmaterial sowohl Hydroxygruppen als auch organisch polymerisierbare C=C-Doppelbindungen aufweist. In einer ersten Ausführungsform wird dies dadurch realisiert, dass das Einbettungsmaterial Einheiten aufweist, die mit mindestens einer Hydroxygruppe sowie mindestens einem Substituenten substituiert sind, der seinerseits mindestens eine organisch polymerisierbare C=C-Doppelbindung aufweist. Bei diesen Einheiten handelt es sich vorzugsweise entweder um über Kohlenstoff an Siliciumatome gebundene Reste eines organisch modifizierten Kieselsäure(hetero)polykondensats und/oder um die Monomereinheit einer organischen Verbindung, im Falle einer rein organischen monomeren Verbindung also um die Verbindung als solche, während im Falle einer polymeren Verbindung jede Monomereinheit darin die genannten zwei Substituenten aufweist. In einer zweiten Ausführungsform weist das Einbettungsmaterial ein Gemisch aus mindestens zwei verschiedenen Einheiten auf, wobei eine erste Einheit mit mindestens einer Hydroxygruppe substituiert ist und eine zweite Einheit mit mindestens einem Substituenten substituiert ist, der seinerseits mindestens eine organisch polymerisierbare C=C-Doppelbindung aufweist. In dieser Ausführungsform handelt es sich bei den genannten Einheiten um unterschiedliche, über Kohlenstoff an Siliciumatome gebundene Reste eines organisch modifizierten Kieselsäure(hetero)polykondensats oder um ein Gemisch aus mindestens zwei rein organischen, monomeren oder polymeren Verbindungen, wobei die erste Verbindung mit mindestens einer Hydroxygruppe substituiert ist und die zweite Verbindung mindestens eine organisch polymerisierbare C=C-Doppelbindung trägt, oder um eine polymere Verbindung mit mindestens zwei unterschiedlichen (Monomer-)Einheiten, wobei die ersten Einheit mit mindestens einer Hydroxygruppe substituiert ist und die zweite Einheit mindestens eine organisch polymerisierbare C=C-Doppelbindung trägt.

Kombinationen von innerhalb der einzelnen Ausführungsformen genannten Varianten sowie von Varianten der ersten und der zweiten Ausführungsform sind selbstverständlich ebenfalls möglich, d.h. beispielsweise die Kombination eines Kieselsäure(hetero)polykondensats mit einer oder mehreren rein organischen Verbindung(en).

Im Sinne der Erfindung besitzt ein Material, das als "polymer" bezeichnet wird, mehr als eine Monomereinheit und umfasst damit auch sogenannte Oligomere.

Das Einbettungsmaterial kann, muss aber nicht, weitere Komponenten enthalten, die vorzugsweise nicht mehr als 30 Gew.-%, stärker bevorzugt nicht mehr als 15 Gew.-% des gesamten Einbettungsmaterials ausmachen. Diese Komponenten können, müssen aber nicht, weitere reaktive Gruppen tragen.

Bei den organisch polymerisierbaren C=C-Doppelbindungen handelt es sich um solche, die durch eine sogenannte Additionspolymerisation polymerisierbar sind, vorzugsweise um Acryl- oder Methacrylgruppen, z.B. um die entsprechenden (Meth)Acrylate, Thio-(Meth)Acrylate oder (Meth)Acrylamide.

Organisch modifizierte Kieselsäure(hetero)polykondensate sind auch bekannt unter der geschützten Bezeichnung ORMOCER®e; sie werden aus oder unter Verwendung von hydrolysierbaren und kondensierbaren Silanen hergestellt, die über Kohlenstoff an das Silicium gebundene Gruppen tragen. Diese Gruppen sind erfindungsgemäß zumindest teilweise mit den oben genannten Substituenten modifiziert; es können aber weiterhin auch Alkylreste oder dergleichen vorhanden sein, die beliebige andere Substituenten aufweisen können. Der in Klammern gesetzte Zusatz "(hetero)" im Polykondensat bezieht sich auf die Möglichkeit, dass dessen anorganisches Netzwerk nicht nur Silicium, sondern weitere Heteroatome aufweist, z.B. Metallatome wie Al, Zn oder Zr. Dies alles ist aus dem Stand der Technik gut bekannt.

Als Lösungsmittel für das Material der Arbeitselektrode dient ein polares Lösungsmittel, das die Metall-Komplexverbindung(en) und gegebenenfalls das Einbettungsmaterial löst. Vorzugsweise werden Wasser, ein $C_1$-$C_6$-Alkohol wie Methanol oder Ethanol oder ein Gemisch aus mindestens zwei der genannten Lösungsmittel, möglicherweise mit Zusatz eines hochsiedenden Lösungsmittels (mit einem Siedepunkt von vorzugsweise über 100°C, z.B. 2-Butoxyethanol), vorzugsweise ein Alkohol-Wasser-Gemisch wie ein Gemisch aus Ethanol und Wasser und ganz besonders bevorzugt Ethanol oder ein Ethanol-Methanol-Gemisch verwendet.

Das Vorhandensein von OH-Gruppen im Einbettungsmaterial verleiht diesem eine geeignete Polarität, die z.B. dafür sorgt, dass sich das Einbettungsmaterial gut im Lösungsmittel für die Metall-Komplexverbindung löst. Außerdem wirken sie sich günstig auf die Benetzung des Substrats und auf die Haftung des Einbettungsmaterials daran aus. Im Übrigen bewirkt das Vorhandensein der organischen, C=C-Doppelbindungen enthaltenden Gruppen, dass die Arbeitselektrode sehr flexibel bleibt, und zwar auch in den Fällen, in denen das Einbettungsmaterial aus einem Kieselsäure(hetero)polykondensat besteht oder ein solches enthält und damit relativ starre Si-O-Si-Gruppierungen aufweist.

Die Menge des Einbettungsmaterials in der Arbeitselektrode wird in der Regel so gewählt, dass im Lösungsmittel ein Molverhältnis der Komplexverbindung zu Einbettungsmaterial von 10:1 bis 1:40, vorzugsweise 1:1 bis 1:40 und besonders bevorzugt von ca. 1,5:1 bis 1:4 vorliegt.

Durch die Einbettung des oder der Metall-Komplexverbindung(en) in das Einbettungsmaterial wird deren Haftung und damit Verbleib in der Arbeitselektroden-Schicht überraschend stark verbessert mit der Folge, dass die elektrochrome Zelle auch bei Temperaturen oberhalb von 60°C über eine große Anzahl von Zyklen hinweg stabil geschaltet werden kann, ohne dass der Transmissionshub erkennbar abnimmt.

Das Material der Gegenelektrode muss entweder in der Lage sein, Kationen des Elektrolytmaterials einzulagern, oder es muss einer Redoxreaktion unterworfen werden können.

Aufgrund der Vielzahl von zur Verfügung stehenden Interkalations- und Redoxmaterialien ist der Fachmann in der Wahl des Materials für die Gegenelektrode dem Grunde nach erst einmal nicht beschränkt. Soll jedoch ein Schaltwechsel mit einer deutlichen Farbabschwächung möglich sein, sind verschiedene Überlegungen von Bedeutung. So kann die Gegenelektrode in einer Ausführungsform der Erfindung entweder eine nur sehr geringe und vorzugsweise gar keine Färbeeffizienz aufweisen.

Wenn ein Material eingesetzt werden soll, das Interkalationseigenschaften, insbesondere für Lithium als Kation des Elektrolytsalzes, aufweist, können beispielsweise solche Materialien für die Gegenelektrode eingesetzt werden, die als Lithium-Interkalationselektroden in Lithium-Akkumulatoren bekannt sind, sofern sie ein geeignetes Normalpotential aufweisen. Das Potential der Gegenelektrode muss dabei kleiner als das der Arbeitselektrode sein. Die benötigte Energie hängt von der Zellspannung ab und sollte möglichst gering (etwa 1,5 V) sein.

Hierfür eignen sich klassische Ionenspeichermaterialien wie z.B. $V_2O_5$. Bei Bedarf können die Filme mit $TiO_2$ dotiert werden, was ihnen eine noch geringere Färbung und höhere elektrochemische Stabilität verleiht. Derartige $V_2O_5$-Schichten sind geeignet, ausreichende Ladungsdichten in einer MEPE-basierten elektrochromen Folienvollzelle zur Verfügung zu stellen. Sie sind somit grundsätzlich interessant im Hinblick auf die Erzielung neutraler Tönungen. Deshalb bietet sich die Verwendung von Titanvanadiumoxid ($Ti_{1-y}V_yO_x$) und insbesondere $TiV_2O_7$ an. Dieses Material kann Lithiumionen interkalieren; dabei wird $V^{5+}$ partiell zu $V^{4+}$ reduziert, bei der Rückreaktion entsteht wieder $V^{5+}$. Titanvanadiumoxid -Schichten lassen sich durch Sputtertechniken erhalten. Weitere einsetzbare Übergangsmetalloxide sind z.B. Vanadium(V)oxid, Titan(IV)oxid, Cer(IV)oxid oder entsprechenden Mischoxide. Denkbar ist grundsätzlich auch der Einsatz von Lithiummetalloxiden und -phosphaten (z.B. $LiMnO_2$, $LiFePO_4$, $Li_3Fe_2(PO_4)_3$), sofern die Arbeitselektrode ein gegenüber diesen Materialien höheres Potential aufweist.

Alternativ kann die Gegenelektrode aus einem Material bestehen, das komplementär zur Arbeitselektrode seine

Farbe wechselt (also anodisch einfärbbar ist), sodass sich sogar ein verstärkender Farbeffekt ergibt. Wechselt beispielsweise die Arbeitselektrode bei einer Oxidation eines eisenhaltigen MEPE von Fe(II) nach Fe(III) die Farbe von blau (reduziert) nach farblos (oxidiert), muss die zweite Gegenelektrode so ausgewählt werden, dass sie kaum eine Farbänderung durchläuft, während das in ihr enthaltene Material reduziert wird, oder aber dass dieses durch die Reduktion ebenfalls eine blaue oder von der Färbung der Arbeitselektrode abweichende Farbe erhält, wobei dann die Farbmischung der beiden Elektrodenfarben die ins Auge des Betrachters fallende Farbe ausmacht.

Da die MEPEs der Arbeitselektrode reduziert vorliegen und kathodisch einfärben, muss die Gegenelektrode in diesen Fällen zwingend oxidiert vorliegen und anodisch einfärben. Anzumerken ist hierbei, dass hierbei weder die Arbeitselektrode noch die Gegenelektrode "konditioniert", also voroxidiert oder vorreduziert werden müssen, bevor das elektrochrome Element seinen Betrieb aufnimmt, wie es bei elektrochromen Elementen des Standes der Technik häufig der Fall ist.

Möglich sind weiterhin anodisch färbende Metallo-Polyelektrolyte wie Kupferkomplexe mit einem einen Fluoren-Spacer aufweisenden Bis-1,10-Phenanthrolin, siehe Hossain, Sato und Higuchi, a.a.O., oder einer Mischung derselben.

Auch ein weiteres Beispiel nutzt ein Material, das einer Redoxreaktion zugänglich ist und dabei ein Alkali-Ion wie Lithium oder Kalium aufnehmen kann, nämlich Preußisch Blau. Die Reduktion dieses Material lässt sich mit der nachstehenden Reaktionsgleichung darstellen:

$$Fe^{III}_4[Fe^{II}(CN)_6]_3 \text{ (blau) zu } Li_4Fe^{II}_4[Fe^{II}(CN)_6]_3 \text{ (ungefärbt)}$$

Anstelle von Preußisch Blau lassen sich unter Umständen auch Derivate davon einsetzen, in denen vor allem die zweiwertigen Eisenkationen durch andere (Übergangs-)Metallzentren wie Co, Ni, Cu etc. ersetzt sind.

Preußisch Blau ist ein besonders bevorzugtes Material für die Gegenelektrode, insbesondere, wenn die Arbeitselektrode einen Eisen-Terpyridyl-Komplex aufweist. Über eine galvanostatische Abscheidung kann die Ladungsdichte dieser Schicht in einfacher Weise genau auf die der korrespondierenden Arbeitselektrode angepasst werden. Preußisch Blau schaltet dabei exakt komplementär zu Fe-MEPEs von blau im oxidierten Zustand zu transparent im reduzierten Zustand, so dass die Arbeitselektrode und die Gegenelektrode zeitgleich von blau nach farblos (bzw. von farblos nach blau) schalten und sich der Farbeffekt dabei verstärkt. Ein weiterer Vorteil von Preußisch Blau kann in dessen relativ geringer Färbeeffizienz gesehen werden. Sie beträgt nur etwa ein Fünftel der Färbeeffizienz von Metall-MEPE-Komplexen. Deshalb ist es ohne weiteres möglich, die Ladung dieser Schicht größer zu dimensionieren als die der MEPE-Schicht. Dadurch kann gewährleistet werden, dass die stark absorbierende MEPE-Elektrode stets voll entladen und eine Restfärbung der Zelle somit vermieden werden kann. Die Verwendung von Hexacyanometallaten, insbesondere von Eisenhexacyanoferraten ("Preußisch Blau") ist auch deshalb besonders bevorzugt, weil diese kurzwelliges UV-Licht absorbieren und so die dahinterliegenden Komponenten des elektrochromen Elements von UV-Degradation schützen können.

Als leitfähiges Substrat wird in der Regel ein Substrat eingesetzt wie aus dem Stand der Technik bekannt und beispielsweise in der Einleitung der vorliegenden Anmeldung bereits teilweise erläutert. Das leitfähige Substrat kann dementsprechend grundsätzlich aus einem nichtleitenden Kunststoff oder Glas bestehen, der bzw. das mit einem dünnen Film eines elektrisch leitfähigen Materials beschichtet ist (aufgebracht z.B. über Sputterverfahren oder physikalische oder chemische Dampfphasenabscheidung). Kunststoffe, die als Substrate in Frage kommen, sind z.B. Polyester wie Polyethylenterephthalat (PET) oder Polyethylennaphthalat (PEN). Solche Substrate sind kommerziell erhältlich und erlauben die Herstellung flexibler bzw. gebogener ECDs. Die leitfähigen Oberflächenbeschichtungen können aus einem transparenten leitfähigen Metalloxid (TCO) bestehen. Wichtige Vertreter sind hier vor allem ITO (zinn-dotiertes Indiumoxid) sowie Aluminium- oder Gallium-dotiertes Zinkoxid (AZO bzw. GZO). Für Glas ist vor allem das mit Fluor dotierte Zinnoxid (FTO) zu nennen, ein Material, das wegen der zur Herstellung nötigen Temperaturen, bisher nicht direkt auf Kunststoffsubstrate abgeschieden werden konnte. Neben solchen anorganischen Halbleiterschichten können auch organisch-polymere leitfähige Materialien eingesetzt werden, wie beispielsweise PEDOT [Poly(3,4-ethylendioxy)thiophen], ein Polymer mit geringer Bandlücke. Solche Polymere werden üblicherweise nasschemisch abgeschieden, z.B. über Rolle-zu-Rolle-Verfahren (R2R). Schließlich sind eine ganze Reihe von Metallgitterelektroden ("grids") oder flächig mit Metall beschichtete Substrate bekannt, die ebenfalls für einen Einsatz in den erfindungsgemäßen elektrochromen Elementen geeignet sein können. Die Herstellung solcher Metallstrukturen erfolgt üblicherweise über Aufdampf-, Sputter- oder Druckverfahren, je nachdem, ob flächig beschichtet wird oder Strukturen erzeugt werden sollen. Auch kombinierte Verfahren sind bekannt (z.B. Aufdampfen einer Metallschicht mit nachfolgender chemischer Ätzung).

In einer bevorzugten Ausgestaltung sind die beiden leitfähigen Substrate des elektrochromen Elements identisch, zwischen 75 und 175 $\mu$ dick und bestehen aus einer hochleitfähigen bzw. auf der nach innen weisenden Oberfläche hochleitfähig gemachten Kunststofffolie. Hierfür ist diese vorzugsweise mit einer TCO-Schicht, einem Schichtstapel des "IMI-Typs" (Isolator-Metall-Isolator, wobei unter "Isolator" für die Zwecke der Erfindung ein Halbleitermaterial wie TCO oder ein leitfähiges Polymer, auch "organisches Metall" genannt, zu verstehen ist), einem ggf. über- oder unterbeschichteten Metallgitter beliebiger Struktur, einer elektrisch leitfähigen Polymerschicht oder Mischformen daraus versehen.

Insbesondere können Schichtsysteme eingesetzt werden, die eine Metallschicht oder-struktur aufweisen, welche mit einem elektrisch leitfähigen oder halbleitenden Material überbeschichtet ist. Diese Art eines elektrochromen Elements wird als Folienvollelement oder Folienvollzelle bezeichnet.

In einer speziellen Ausgestaltung sind die leitfähigen Substrate asymmetrisch; eine Seite der Zelle verfügt über ein beispielsweise flexibles Kunststoffsubstrat wie oben angegeben, die andere Seite besteht aus einem starren Substrat, beispielsweise Glassubstrat (vorzugsweise 0,1 - 20 mm dick; es eignen sich beispielsweise Kalk-Natron-Gläser und deren Mischformen, insbesondere Grüngläser, weiterhin Alumosilikatgläser, Borosilikatgläser oder weitere gängige Gläser des Fahrzeugbaus, der Elektronikindustrie oder der Bauindustrie). Die Innenseite der Substrate sind in beliebiger Weise entweder beide mit einer TCO-Schicht, einem Schichtstapel des "IMI-Typs", einem ggf. über- oder unterbeschichteten Metallgitter beliebiger Struktur, einer elektrisch leitfähigen Polymerschicht oder Mischformen daraus versehen, oder sie weisen unterschiedliche, die elektrische Leitfähigkeit sicherstellende Schichten/Schichtsysteme auf. Diese Art eines elektrochromen Elements wird als Hybridelement oder Hybridzelle bezeichnet.

Es ist grundsätzlich vorteilhaft, wenn die Substrate einen möglichst geringen Flächenwiderstand aufweisen. Eine Simulation des Schaltverhaltens großflächiger elektrochromer Elemente hat gezeigt, dass der Flächenwiderstand den entscheidenden Faktor für die Erzielung kurzer Ansprechzeiten darstellt. Für die Erzielung von Schaltzeiten deutlich unter 1 min bei einer Fläche von 1 x 1,5 $m^2$ sind in der Regel Flächenwiderstände von unter 10 Ohm nötig. Durch das Einziehen von Leiterbahnen lassen sich aber auch mit höheren Flächenwiderständen Schaltzeiten von unter 1 min erzielen

Transparente leitfähige Folien, die aus dünnen Metallschichten auf Kunststofffolien bestehen, die im Mikrometer-Bereich strukturiert sind (z.B. das Produkt PolyTC®), besitzen Flächenwiderstände unter 5 Ohm. In US 6,040,056 sind transparente Folien beschrieben, welche mit einem Stapel aus reflexionsmindernden Dünnschichten (Zink-Indium-Mischoxide; IZO) und einer oder mehreren Metallschichten (Silber oder Silber als Hauptbestandteil) veredelt sind. Diese Substrate weisen Flächenwiderstände im Bereich 2,5 bis 1,5 Ohm auf.

Das gesamte elektrochrome Element kann eine Dicke von 150 bis 500 µm haben und muss sich durch eine ausreichende Zwischenschichthaftung und mechanische Flexibilität auszeichnen. Dies ist mit einem Polymerelektrolytmaterial nach obiger bevorzugter Ausgestaltung möglich. Die genaue Dicke des Elementes wird sich nach dem Einsatzbereich richten. Hinreichende mechanische Stabilität und Schutz gegen Kurzschlüsse wird mit folgender Kombination erzielt: 25-500 µm, bevorzugt 100 bis 200 µm und besonders bevorzugt 125 µm leitfähiges Substrat / 0,1-1,5 µm, bevorzugt 0,2-1,0 und besonders bevorzugt 0,300 µm aktives AE-Material / 1-400 µm, vorzugsweise 1 bis 200, stärker bevorzugt 20-150, noch stärker bevorzugt 20 bis 100 und besonders bevorzugt 100 µm Elektrolyt / 0,05-1,0 µm, vorzugsweise 0,1-0,5 µm und besonders bevorzugt 0.2 µm aktives GE-Material / 25-500 µm, bevorzugt 100 bis 200 µm und besonders bevorzugt 125 µm leitfähiges Substrat.

Das flexible elektrochrome Element der Erfindung wird in einer bevorzugten Ausgestaltung dadurch hergestellt, dass alle Schichten über kontinuierliche Beschichtungsverfahren, wie z.B. Rolle-zu-Rolle-Verfahren, aufgetragen und miteinander laminiert werden. Dabei kommen sowohl physikalische (bei der Foliensubstratherstellung) als auch nasschemische Verfahren (bei der Abscheidung der aktiven Schichten sowie der Elektrolytschicht) zum Einsatz. Das bevorzugte erfindungsgemäße Herstellungsverfahren umfasst die folgenden Schritte:

Schritt 1: Herstellung der Arbeitselektrode:

Dieser Schritt erfolgt vorzugsweise über nasschemische, kontinuierliche Abscheidung aus der Flüssigphase auf der elektrisch leitenden Oberfläche des Substrats, z.B. (aber nicht ausschließlich) über Schlitzdüsenbeschichtung.

Schritt 2: Herstellung der Gegenelektrode:

Dieser Schritt erfolgt vorzugsweise über kontinuierliche Abscheidung aus der Flüssigphase, z.B. (aber nicht ausschließlich) über ein galvanisches Verfahren wie die Elektrodeposition oder aus einer Nanopartikelzubereitung auf der elektrisch leitenden Oberfläche des Substrats.

Schritt 3: Konfektionierung der Elektroden:

Dieser Schritt erfolgt durch Zuschnitt (bei sheet-to-sheet-Prozessierung) (Schritt 3A) bzw. durch das Aufbereiten des Rollenmaterials (bei Rolle-zu-Rolle-Prozessierung) (Schritt 3B)

Schritt 4: Herstellung der Elektrolytschicht:

Dieser Schritt erfolgt vorzugsweise über nasschemische, kontinuierliche Abscheidung aus der Flüssigphase, z.B. (aber nicht ausschließlich) über Schlitzdüsenbeschichtung Die Elektrolytschicht kann entweder auf der Arbeitselektrode oder auf der Gegenelektrode abgeschieden werden; alternativ kann sie auf einem Hilfssubstrat abgeschieden, durch Polymerisation verfestigt und sodann vom Hilfssubstrat abgezogen werden, worauf sie als eigenständige ("selbsttragende") Komponente mit den beschichteten Substraten kaschiert oder laminiert werden kann.

Schritt 5: Assemblierung der Elektroden:

Dieser Schritt erfolgt durch manuelle Kaschierung des Elektroden-Blattmaterials aus den Schritten 1, 2 und 3A mittels des auf einer der Elektroden abgeschiedenen Elektrolytmaterials aus Schritt 4 (bei sheet-to-sheet-Prozessierung) oder durch kontinuierliche Laminierung des Elektroden-Rollenmaterials aus den Schritten 1, 2 und 3B mittels des auf einer der Elektroden abgeschiedenen Elektrolytmaterials aus Schritt 4 (bei Rolle-zu-Rolle-Prozessierung) oder durch Kaschieren und/oder Laminieren der drei Komponenten Substrat/Arbeitselektrode, Substrat/Gegenelektrode und selbsttragender Elektrolytschicht.

Schritt 6: Versiegelung und Kontaktierung:

Die Kontaktierung der beiden Elektroden kann mittels eines Versatzes der beiden leitfähigen Substrate erfolgen - die Kontaktierung kann dann über elektrisch hochleitfähige, undurchsichtige oder durchsichtige Leiterbahnen (z. B. Metallstreifen) auf den unbeschichteten Rändern des elektrochromen Elements dargestellt werden, wie in **Figur 3** dargestellt. Zur Erzielung niedrigster Schaltzeiten wird eine vollständige Kontaktierung im Randbereich erforderlich. Um optimale Schaltzeiten zu erreichen, sollten die Längen der Kontaktierungen für die Arbeits- und Gegenelektrode gleich sein, d. h. die Hälfte des Gesamtumfangs des aktiven Bereichs betragen.

Eine zweite Möglichkeit der Kontaktierung, gezeigt in **Figur 4,** durch die sich noch kürzere Schaltzeiten erreichen lassen, besteht in der Rundum-Kontaktierung an beiden Seiten. In diesem Fall müssen die zwei Leiterbahnen über die Versiegelung voneinander elektrisch isoliert werden. Dies ist vor allem durch geringe Toleranzen hinsichtlich der Höhe und Abstände der Leiterbahnen/Kontakte, der Halbzellenpositionen zueinander sowie dann höheren Anforderungen an die Versiegelung bedingt. In diesem Kontaktierungsfall liegen nämlich zwei hochleitfähige Bahnen in kleinem Abstand direkt gegenüber/ übereinander. Der Abstand berechnet sich aus der Dicke der beiden Elektroden sowie der Elektrolytschicht abzüglich der Dicke der Leiterbahnen (dies ist der in Figur 3 dem vertikalen Abstand zwischen den mit "Kontaktierung" bezeichneten Quadraten zu entnehmen). Es darf kein Kurzschluss über die Versiegelung eintreten, die somit stärker isolieren muss als im ersten Fall, wo lediglich eine hochleitfähige Kontaktierungsbahn von der schräg gegenüberliegenden TCO-Schicht der anderen Elektrode getrennt werden muss.

In einem 7. Schritt kann das elektrochrome Element der Erfindung durch Einlaminierung über gängige Laminierverfahren in ein Verbundglas integriert werden *("laminated safety glass"):*

In einer ersten Ausgestaltung der Erfindung, in der beide Substrate aus flexiblen Kunststoffmaterialien bestehen (Folienvollelement), kann dieser Schritt durch das Laminieren des fertigen elektrochromen Elements über herkömmliche Verfahren der Verbundglasherstellung zwischen zwei PVB- oder PET-Folien erfolgen. In diesem Fall entspricht der Querschnitt der Glasscheibe folgendem Aufbau:

Glas / Klebefolie (z.B. PVB oder PET) / Substratfolie mit leitfähiger Schicht / Arbeitselektrode / Elektrolyt / Gegenelektrode / Substratfolie mit leitfähiger Schicht / Klebefolie (z.B. PVB oder PET) / Glas.

In einer zweiten Ausführungsform, in welcher das elektrochrome Element ein Hybridelement ist, dessen eines Substrat aus einer Glasscheibe besteht, erfolgt das Auflaminieren nur einer (zweiten) Glaslage/-scheibe mithilfe einer Klebefolie (z.B. einer PVB oder PET-Folie) an die Folienseite des Hybridelements. In diesem Fall entspricht der Querschnitt der Glasscheibe folgendem Aufbau:

Glassubstrat mit leitfähiger Schicht / AE oder GE / Elektrolyt / GE oder AE / Substratfolie mit leitfähiger Schicht / Klebefolie (z.B. PVB oder PET) / Glas

Eine weitere Variante beinhaltet das Laminieren des Folienvollelements zwischen zwei PMMA- oder PC-Scheiben oder sonstige Formen von Kunststoffverglasungen. In diesem Fall entspricht der Querschnitt der Glasscheibe folgendem Aufbau:

Kunststoffscheibe / Klebefolie (PVB oder PET) / Substratfolie mit leitfähiger Schicht / Arbeitselektrode / Elektrolyt / Gegenelektrode / Substratfolie mit leitfähiger Schicht / Klebefolie (PVB oder PET) / Kunststoffscheibe

Es besteht darüber hinaus die Möglichkeit, eine Folienvollzelle mit zwei Klebefolienschichten zwischen einer Glas- und einer Kunststoffscheibe einzulaminieren. Weiterhin sind Varianten des oben beschriebenen Hybridelement-Verbunds möglich, in denen eine oder beide der Glaslagen/-scheiben durch harte Kunststoffplatten/-scheiben (PC oder PMMA) ersetzt werden können.

Die Assemblierung der Elektroden kann grundsätzlich

a) direkt auf einer Rolle-zu-Rolle-Anlage ("roll-to-roll"), also kontinuierlich, oder
b) nach Zuschnitt der Elektroden, also manuell oder semi-automatisch ("sheet-to-sheet") erfolgen.

Im Einzelnen werden die Arbeitsschritte besonders bevorzugt wie folgt durchgeführt:
Die Arbeitselektrode wird üblicherweise nach einem Verfahren hergestellt, das die folgenden Schritte umfasst:

(A) Vorlegen eines leitfähigen Substrates, das aus einem Glas oder einem Kunststoffbasismaterial besteht und eine elektrisch hochleitfähige Beschichtung und/oder Struktur auf seiner Oberfläche nach obiger Beschreibung aufweist und vorzugsweise einen Flächenwiderstand von ≤ 30 Ohm stärker bevorzugt von ≤ 10 Ohm besitzt.

(B) Herstellen einer flüssigen Zusammensetzung aus (a) mindestens einer, vorzugsweise mindestens zwei Metall-Komplexverbindungen, die in der Lage ist/sind, eine Redoxreaktion einzugehen, wobei der Übergang vom oxidierten in den reduzierten Zustand mit einer Farbvertiefung und der Übergang vom reduzierten in den oxidierten Zustand mit einer entsprechende Farbabschwächung einhergeht (auch bezeichnet als kathodisch färbende Metallopolymere oder MEPEs), wobei dann, wenn mindestens zwei dieser Metallopolymere eingesetzt werden, sich deren Lichtabsorptionseigenschaften ergänzen, (b) einem oder mehreren Lösemitteln, vorzugsweise aus der Gruppe der Alkanole und Etheralkanole, (c) optional einem geeigneten Bindemittel, vorzugsweise (aber nicht ausschließlich) aus der Gruppe der anorganisch-organischen Hybridpolymere (im Folgenden in diesem Zusammenhang "HP" genannt) oder Polysiloxane und ganz besonders bevorzugt einem organisch modifizierten Hybridpolymer oder Polysiloxan, das organisch vernetzbar ist, in Kombination mit einem Vernetzungsinitiator (d) (mit thermischem oder photochemischem Mechanismus);
oder

(B') Herstellung zweier flüssiger Zusammensetzungen (a, a') aus je mindestens einem kathodisch färbenden Metallopolymeren wie oben definiert mit sich ergänzenden Lichtabsorptionseigenschaften, (b) einem oder mehreren Lösemitteln, vorzugsweise aus der Gruppe der Alkanole und Etheralkanole, (c) optional einem geeigneten Bindemittel, vorzugsweise (aber nicht ausschließlich) aus der Gruppe der anorganisch-organischen Hybridpolymere (im Folgenden in diesem Zusammenhang "HP" genannt) oder Polysiloxane und ganz besonders bevorzugt einem organisch modifizierten Hybridpolymer oder Polysiloxan, das organisch vernetzbar ist, in Kombination mit einem Vernetzungsinitiator (d) (mit thermischem oder photochemischem Mechanismus);

(C) Auftragen dieser Zusammensetzung(en) auf das Substrat über ein gängiges Beschichtungsverfahren, vorzugsweise kontinuierliche Schlitzdüsenbeschichtung im Rolle-zu-Rolle-Verfahren;

(D) Trocknen und Verdichten der so aufgetragenen Schicht(en) durch thermische Nachbehandlung und/oder Infrarot-Trocknung.

Die Gegenelektrode kann nach einem Verfahren hergestellt werden, das die folgenden Schritte umfasst:

(A) Vorlage eines leitfähigen Substrates, das aus einem Kunststoffbasismaterial besteht und eine elektrisch hochleitfähige Beschichtung und/oder Struktur auf seiner Oberfläche nach obiger Beschreibung aufweist und vorzugsweise einen Flächenwiderstand von ≤ 30 Ohm stärker bevorzugt von ≤ 10 Ohm aufweist;

(B) Herstellung einer flüssigen Zusammensetzung aus einem oder mehreren Metall(III)salzen oder einer stabilen Suspension von Hexacyanoferrat-Nanopartikeln, ggf. unter Anwendung von stabilisierenden Additiven und Bindemitteln;
oder

(B') Herstellung einer flüssigen Zusammensetzung aus Übergangsmetallalkoxiden, und Überführen derselben in Oxide bzw. Mischoxide, wie sie oben als Materialien für die GE genannt sind, durch hydrolytische Kondensation;
oder

(B") Herstellung einer flüssigen Zusammensetzung aus einem oder mehreren anodisch färbenden Metallo-Polymeren und ggf. einem geeigneten Bindemittel, zum Beispiel einem der Bindemittel, die oben als Einbettmaterial für die Arbeitselektrode beschrieben sind

(C) Abscheiden der Zusammensetzung unter Ausbildung einer dünnen Schicht des Gegenelektroden-Materials auf dem Substrat, vorzugsweise kontinuierlich in einem Rolle-zu-Rolle-Verfahren, insbesondere entweder in einem Gießprozess (Schlitzdüsenbeschichtung) oder galvanisch/elektrophoretisch.

Die Aufbringung beider Elektrodenmaterialien kann dabei Vorbehandlungsschritte umfassen, wie beispielsweise die Aktivierung des Substrats über Corona-Verfahren oder die Aufbringung von Primerschichten auf dem Substrat, bevor das eigentliche Aktivmaterial appliziert wird.

Die Herstellung der Polymerelektrolyt-Schicht erfolgt in günstiger Weise auf dem folgenden Weg:

(A) Die oben beschriebenen Komponenten für den Polymerelektrolyten werden unter Ausbildung einer Polymerelektrolyt-Vorstufe gemischt.

(B) Die flüssige oder pastöse Vorstufe kann direkt auf die Schicht der Arbeitselektrode oder der Gegenelektrode unter Ausbildung einer Polymerelektrolyt-Vorstufenschicht aufgetragen werden. In einer bevorzugten Ausgestaltung erfolgt die Auftragung über ein Rakel-, Schlitzdüsen- oder anderweitiges, nasschemisches Auftragsverfahren. Die so beschichtete Elektrode wird dann mit der anderen Elektrode assembliert, vorzugsweise über ein Kaschier- oder Laminierverfahren, um das elektrochrome Element zu bilden.

(B') Alternativ kann die flüssige Vorstufe unter Ausbildung einer Polymerelektrolyt-Vorstufenschicht auf ein Hilfssubstrat aufgetragen werden.

(C) Anschließend wird die Elektrolytschicht mit UV-Licht oder kurzwelligem sichtbaren Licht bestrahlt, um eine photochemische Vernetzung herbeizuführen. Dies erfolgt vorzugsweise durch die Gegenelektrode hindurch. Hierbei kann der Einsatz von Photoinitiatoren notwendig sein. Alternativ kann die Vernetzung auch thermisch herbeigeführt werden, z.B. durch Zugabe eines thermischen Radikalstarters in die Polymerelektrolyt-Vorstufe und nachfolgende Wärmebehandlung. Die Vernetzung kann alternativ auch vor der Assemblierung der Elektroden erfolgen. Der Auftrag der flüssigen Elektrolytkomposition sowie die Assemblierung erfolgen vorzugsweise über kontinuierliche Verfahren.

Die Trockenschichtdicke des kathodisch färbenden Aktivmaterials der Arbeitselektrode liegt im Bereich zwischen 50 nm bis 1000 nm, bevorzugt im Bereich zwischen 200 und 500 nm. Die Trockenschichtdicke des anodisch färbenden Aktiv- oder Ionenspeichermaterials der GE hängt von der Ladungsdichte ("Kapazität") der GE ab und kann sich je nach Material und Speicherkapazität zwischen 50 nm und 1000 nm bewegen. Eine aus bevorzugt einsetzbaren MEPE-Verbindungen erzeugte Arbeitselektrode hat in der Regel eine Ladungsdichte von 1-10 $mC/cm^2$, bevorzugt zwischen 2 und 5 $mC/cm^2$, gemessen über galvanostatisches Laden und Entladen bei definierten Stromdichten in einem Flüssigelektrolyten aus 1 M $LiClO_4$ in Propylencarbonat. Die Ladungsdichte der GE sollte erfindungsgemäß bezogen auf die Ladungsdichte der Arbeitselektrode vorzugsweise um 0-30% überdimensioniert sein.

Das gesamte elektrochrome Element kann eine Dicke von 150 bis 500 $\mu$m haben und muss sich durch eine ausreichende Zwischenschichthaftung und mechanische Flexibilität auszeichnen. Dies ist mit einem Polymerelektrolytmaterial nach obiger bevorzugter Ausgestaltung möglich. Die genaue Dicke des Elementes wird sich nach dem Einsatzbereich richten. Hinreichende mechanische Stabilität und Schutz gegen Kurzschlüsse wird mit folgender Kombination erzielt: 125 $\mu$m (leitfähiges Substrat) / 0.300 $\mu$m (aktives AE-Material) / 100 $\mu$m (Elektrolyt) / 0.2 $\mu$m (aktives GE-Material) / 125 $\mu$m (leitfähiges Substrat).

Die beschriebene Materialkombination (und hier insbesondere die Wirkung der kathodisch färbenden MEPE-Mischungen sowie der Einsatz hochleitfähiger Substrate des IMI-Typs) ermöglicht die Erzielung hoher Helltransmission gepaart mit kurzen Schaltzeiten und der Möglichkeit einer Farbanpassung. Für eine automobile Anwendung ist dieses Eigenschaftsprofil essenziell und mit anderen Materialkombinationen nicht zu erreichen. Neben der elektrochromen Funktion muss die Folie zudem eine Reihe weiterer Eigenschaften erfüllen, wie mechanische Flexibilität und gute Zwischenschichthaftung, um die Herstellung von Verbundsicherheitsglas über gängige industrielle Laminierprozesse zu ermöglichen. Dies wird mit dem erfindungsgemäßen Polymerelektrolytmaterial erreicht, welches aus vier oder fünf bzw. optional sechs Komponenten mit eindeutigen Wirkungscharakteristika (Klebrigkeit, Festigkeit, Leitfähigkeit, Vergilbungsneigung, Flexibilität) besteht. Der wesentliche Vorteil besteht darin, dass ein solches Material während der Anwendung mechanisch stabil bleibt, während des Laminierprozess aber eine Erweichung zeigt, wodurch die Eigenschaften des Gesamtverbundes verbessert werden. Gleichzeitig muss das Material einen nahe bei 100% liegenden Transmissionsgrad aufweisen.

Der Elektrolyt kann mittels einer Nanopartikelzubereitung weiter optimiert werden. Die Einbringung erfolgt dabei vorzugsweise nicht rein physikalisch, sondern über eine kovalente Anbindung der Partikel an den Polymerelektrolyten, wodurch die Sedimentations- und Agglomerationsneigung stark verringert wird. Der Effekt ist ein verminderter Schrumpf bei Vernetzung (Formstabilität).

Demzufolge kann das elektrochrome Element der vorliegenden Erfindung für vollständige Schreiben oder Gläser oder für Teilbereich von Scheiben oder Gläsern eingesetzt werden, wobei das elektrochrome Element über die Fläche oder eine Teilfläche hinweg homogen oder inhomogen (d. h. mit unterschiedlicher Zusammensetzung vor allem der Arbeitselektrode oder der Gegenelektrode, gegebenenfalls aber auch anderer Komponenten des elektrochromen Elements) eingesetzt werden. Es eignet sich unter anderem, aber nicht ausschließlich, für die nachstehend genannten

Anwendungen:

- Kraftfahrzeuge
    - Frontscheiben
    - Windschutz (Krafträder)
    - Heckscheiben
    - Seitenscheiben (fest und beweglich bzw. vor und hinter der B-Säule)
    - Dachscheiben sowie Scheibendächer (fest und beweglich)
    - Trennscheiben
    - Anzeigen / Displays / Blenden
    - Motorraum- oder sonsitige Abdeckungen
    - Motor-/ Fahrradhelmvisiere
- Schienenfahrzeuge
    - Front- und Seitenscheiben von Triebwägen / Loks
    - Seiten-, Tür- und Trennscheiben bei Wägen / Wagons.
    - Anzeigen / Displays / Blenden
- Flugzeuge
    - Kabinenfenster
    - Raumteiler
    - Anzeigen / Displays / Blenden
- Schiffe
    - Kabinenfenster
    - Raumteiler
    - Anzeigen / Displays / Blenden
- Intelligente Architekturverglasung
    - Gebäude-Außenscheiben (Smart windows),
    - Oberlichter
    - Raumteiler
- Brillen
    - Sonnenbrillen
    - "Smarte Brillen"
    - Virtual Reality-Brillen
    - Skibrillen
- Haushaltsgeräte

Nachstehend soll die Erfindung anhand von einer Reihe von Beispielen näher erläutert werden, ohne dass diese Beispiele als beschränkend angesehen werden dürfen.

**Herstellungsbeispiel 1: Synthese eines hybridpolymeren Harzes (ORMOCER®-Harz 1)**

Zu 248,35 g 3-(Trimethoxysilyl)propyl methacrylat (MEMO) werden bei einer Temperatur < 10°C langsam 27,03 g einer 0,1 M HCl-Lsg. hinzugetropft und für 2 h gerührt (= Reaktions-lösung A). In einem zweiten Reaktionskolben werden 88,65 g $Zr(n\text{-}OPr)_4$ vorgelegt und auf < 5°C gekühlt. 17,2 g Methacrylsäure (MAS) werden hinzugetropft und die Mischung für 0,5 h gerührt. (= Reaktionslösung B). Anschließend wird Reaktionslösung A auf <10°C gebracht und Reaktionslösung B so zugetropft, dass die Reaktionstemperatur zwischen 4-10°C liegt. Nach Beendigung der Zugabe lässt man die Reaktionsmischung langsam auf RT erwärmen und rührt für 2 d. Das Lösungsmittel wird zunächst am

Rotationsdampfer, anschließend mittels Hochvakuum entfernt. Es werden 298,72 g eines gelblich-orangen, transparenten Harzes erhalten.

**Herstellungsbeispiel 2:** Synthese eines acrylatfunktionellen hybridpolymeren Basisharzes (HP) (BS-II)

Stufe 1

Zur Vorlage von 40 g (0,08 mol) 3-Glycidyloxypropylmethyldiethoxysilan werden bei Raumtemperatur unter Rühren 38 ml 4N Salzsäure zugetropft und bei Raumtemperatur 3 Tage weitergerührt. Nach Aufarbeitung (Waschen mit Wasser, Aufnahme in Essigester, Trocknung über Natriumsulfat und Entfernung von flüchtigen Bestandteilen) wird ein flüssiges Harz mit einem hohen Kondensationsgrad (>90%) und vollständiger Ringöffnung der Epoxidgruppe erhalten. Die Viskosität des Harzes beträgt 22 Pa·s bei 25°C.

Stufe 2

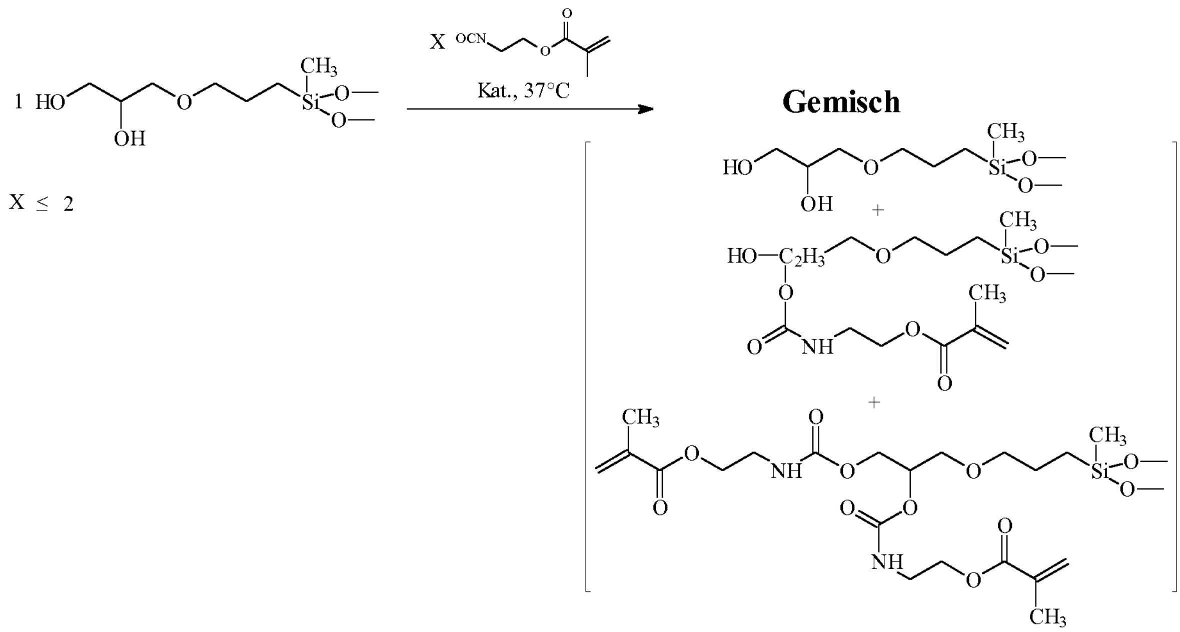


Zur Vorlage von einer Mischung aus 20 g (0,104 mol) Harz aus der Stufe 1, 24 mg BHT und 61 mg Dibutylzinndidodecanat und ggf. wasserfreiem Lösungsmittel THF werden unter trockener Atmosphäre bei 37°C unter Rühren x mol (siehe die nachstehende Tabelle) Methacrylsäureisocyanatoethylester zugetropft und bei 37°C weitergerührt. Die Umsetzung kann über die Abnahme der OCN-Bande mittels IR-Spektrum verfolgt werden. Die für die OCN-Gruppe charakteristische Bande erscheint im IR-Spektrum bei 2272 $cm^{-1}$. Es resultieren nach Entfernung des THF flüssige Harze. Für die weiteren Versuche wurde ein Gemisch eingesetzt, das ein Verhältnis von Siliciumatomen zu Methacrylatgruppen von 4:1 (d.d. es wurden 0,25 mol Isocyanat pro kondensierter Silaneinheit eingesetzt).

| BS-II | x [mol] | Viskosität [Pa s] |
|---|---|---|
| A | 0,026 | 12 |
| B | 0,052 | 73 |
| C | 0,104 | 153 |

**Beispiel 1a - Herstellung einer Polymerelektrolytzubereitung**

0,30 g des Ethylmethacrylat-Methylacrylat-Copolymers Paraloid B72 (getrocknet) werden in 3.00 g trockenem

Propylencarbonat bei ca. 40°C gelöst und mit 0,29 g Lithiumperchlorat (battery grade) versetzt. Die Lösung wird bei Raumtemperatur (RT) unter trockener Atmosphäre über Nacht gerührt. Danach werden 0,35 g des ORMOCER®-Harzes 1 aus dem Herstellungsbeispiel, 0,65 g Triethylenglycoldimethacrylat und 0,02 g Irgacure 651 (Photoinitiator) gegeben und die Mischung lichtdicht verpackt. Nach ca. 1 h ist eine homogene, hochviskose Lösung entstanden, die direkt für die Zellassemblierung eingesetzt werden kann.

**Beispiel 1b** - **Herstellung einer Polymerelektrolytzubereitung**

0,25 g Polymethylmethacrylat (MW = 20000) (getrocknet) werden in 0,4 g trockenem Ethylencarbonat bei ca. 40°C gelöst und mit 0,12 g Lithiumperchlorat versetzt. Die Lösung wird bei RT unter trockener Atmosphäre über Nacht gerührt. Danach werden 0,1 g des ORMOCER®-Harzes aus dem Herstellungsbeispiel 2 sowie 0,25 g Triethylenglycoldimethacrylat und 0,02 g Irgacure 651 (Photoinitiator) gegeben und die Mischung lichtdicht verpackt. Nach ca. 1 h ist eine homogene, hochviskose Lösung entstanden, die direkt für die Zellassemblierung eingesetzt werden kann.

**Beispiel 1c** - **Herstellung einer Polymerelektrolytzubereitung**

0,03 g des Ethylmethacrylat-Methylacrylat-Copolymers Paraloid B72 (getrocknet) werden in 1,00 g trockenem Tetraethylenegylcol-Dimethoxyether bei ca. 40°C gelöst und mit 0,33 g Lithium-Bis(trifluoromethan)sulfonimid versetzt. Die Lösung wird bei RT unter trockener Atmosphäre über Nacht gerührt. Danach werden 0,60 g des ORMOCER®-Harzes 1 aus dem Herstellungsbeispiel sowie 0,06 g Hexandioldiacrylat und 0,02 g Irgacure 651 (Photoinitiator) gegeben und die Mischung lichtdicht verpackt. Nach ca. 1 h ist eine homogene, hochviskose Lösung entstanden, die direkt für die Zellassemblierung eingesetzt werden kann.

**Vergleich der bei Zugscherung erhaltenen Werte erfindungsgemäßer Polymerelektrolytzubereitungen mit denen eines Polymerelektrolyten ohne ein vernetzbares hybrides Prepolymer und ohne Reaktivverdünner**

Eine Zugscherfestigkeitsprüfung, die üblicherweise an einer "Zwick-Prüfmaschine" durchgeführt wird, erlaubt Aussagen über die Haftung zwischen Substrat und Elektrolytschicht und ist die derzeit am häufigsten angewandte Prüftechnik für Klebeverbindungen. Bei dieser Messmethode werden zwei Folienstreifen überlappend mit dem Elektrolytmaterial "verklebt". Da für die Auswertung mehrere Prüfkörper erforderlich sind und die Zugscherkraft stark von der Fläche der Überlappung abhängt, ist streng darauf zu achten, dass immer exakt gleichgroße Flächen verklebt werden. Die Streifen werden vertikal in eine Zugvorrichtung eingespannt. Über eine Kraftmessdose wird dann die benötigte Kraft bis zum Zerreißen der Probe gemessen.

Elektrolyt 1 (MB30 = Vergleichsversuch; enthält nur Paraloid B72 und 1M $LiClO_4$ in PC) = 8 kPa

Elektrolyt 2 (TM067 = 5 Komponenten-Elektrolyt gemäß Beispiel 1c) = 138 kPa

Elektrolyt 3 (TM069 = 5 Komponenten-Elektrolyt gemäß Beispiel 1a) = 356 kPa

Alle drei Elektrolytmaterialien wurden in Gegenwart von Licht vernetzt. Die Ergebnisse sind in der nachstehenden **Tabelle 3** sowie in Figur 16 gezeigt, in der die Werte für den Elektrolyten 1 oben und die Werte für die Elektrolyte 2 und 3 in der Mitte und unten dargestellt sind. Es zeigt sich, dass Elektrolyt 2 und Elektrolyt 3 einem einfachen organischen Elektrolyten 1 bezüglich der Klebrigkeit und Haftung deutlich überlegen sind. Dabei konnte Elektrolyt 3 über eine Optimierung der 5 Komponenten hinsichtlich der Klebrigkeit und Haftung deutlich verbessert werden.

**Tabelle 3: Zugscherfestigkeit. Maße der vermessenen Probe: 25x25x100 mm, Wiederholungen: N = 10**

| ID | Kratmax. / N | s / N | dL / mm | s / mm | Zugscherfestigkeit / kPa | s / kPa |
|---|---|---|---|---|---|---|
| MB30 | 5 | 7 | 0,14 | 0,06 | 8 | 11,4 |
| TM067 | 86 | 12 | 0,54 | 0,09 | 138 | 19,2 |
| TM069 | 222 | 26,4 | 1,62 | 0,29 | 356 | 42,3 |

**Beispiel 1d** - **Herstellung oberflächenmodifizierter Silicananopartikel**

Die Funktionalisierung der Silicananopartikel "Ludox AS40" (wässrige Suspension, 20 Gew.-% Partikelanteil)

erfolgte nach Posthumus et. al. (Journal of Colloid and Interface Science 269 (2004), 109-1167). In einem 100 ml Kolben wurden 10,00 g der Silicananopartikelsuspension vorgelegt und mit 3,33 g destilliertem Wasser verdünnt. Nach der Zugabe von 25,00 g Methanol und 0,80 g 3-Methacryloxypropyltrimethoxysilan wurde das Gemisch bei 70°C für 4 h unter Reflux gerührt. Durch das anschließende Abkühlen der Suspension trat durch schwache Koagulation der funktionalisierten Silicananopartikel eine Trübung auf, die durch die Zugabe von 10,00 g n-Propanol wieder aufgelöst wurde. Am Rotationsverdampfer wurden die flüchtigen Komponenten unter verminderten Druck so weit entfernt bis ein feuchtes Gel im Kolben verblieb. Durch die anschließende Zugabe von 12,00 g n-Propanol und die Behandlung für 15 min im Ultra-schall wurde wieder eine klare Suspension erhalten. Der Feststoffgehalt lag bei 33,7 Gew.-%

**Beispiel 1e** - **Einarbeitung der Nanopartikel in das ORMOCER-Harz**

Die Einarbeitung der mit 3-Methacryloxypropyltrimethoxysilan oberflächenfunktionalisierten Silicananopartikel erfolgte durch die Zugabe von 14,75 g der Nanopartikelsuspension gemäß Beispiel 1d zu 11,60 g ORMOCER®-Harz 1. Die Partikelkonzentration im ORMOCER® betrug 30 Gew.-%. Durch Rühren ergab sich eine klare Dispersion der Silicananopartikel in einem Gemisch aus n-Propanol und ORMOCER®-Harz 1. Anschließend wurde die zugegebene Menge an n-Propanol bei 50°C und unter vermindertem Druck am Rotationsverdampfer abgetrennt. Die erhaltene Mischung war transparent und klar.

**Beispiel 1f- Herstellung einer Polymerelektrolytzubereitung mit oberflächenmodifizierten Silicananopartikeln**

0,20 g des Ethylmethacrylat-Methylacrylat-Copolymers Paraloid B72 (getrocknet) werden in 0,816 g eines Gemischs aus Propylencarbonat-Diethylencarbonat (Verhältnis = 3:7) mit einem Gehalt an 1 molar $LiClO_4$ bei ca. 40°C gelöst. Die Lösung wird bei Raumtemperatur (RT) unter trockener Atmosphäre über Nacht gerührt. Danach werden 0,30 g des ORMOCER®-Harzes 1 aus dem Herstellungsbeispiel 1, 0,60 der Silicananopartikel aus Beispiel 1d, 0,20 g Triethylenglycoldimethacrylat und 0,02 g Irgacure 651 (Photoinitiator) zu gegeben und die Mischung lichtdicht verpackt. Nach ca. 1 h ist eine homogene, hochviskose Lösung entstanden, die direkt für die Zellassemblierung eingesetzt werden kann.

**Beispiel 2a** - **Herstellung einer HP/MEPE-L1-Beschichtungslösung**

1,33 g des acrylatfunktionellen hybridpolymeren Basisharzes BS-II A aus dem Herstellungsbeispiel 2 werden in 50 ml MeOH/EtOH (90/10 wt%) + 12,5 wt% 2-Butoxyethanol gelöst und für 24 h bei RT gerührt. Zu dieser Lösung werden 1,25 g (1,75 mmol) Fe-MEPE-L1 (Formel siehe obige Tabelle 2) gegeben und bei RT für weitere 24 h gerührt, bis eine homogene Lösung vorliegt. Die Fe-MEPE-L1 -Konzentration in der Lösung beträgt 35 mM und das Stoffmengenverhältnis von Hybridpolymer zu Fe-MEPE-L1 etwa 3:1 (kann bei Bedarf auch variiert werden). Die HP/MEPE-Lösung kann danach als Beschichtungsmaterial zur Herstellung der Arbeitselektrode eingesetzt werden.

**Beispiel 2b** - **Herstellung eines HP/MEPE-L1-Dünnfilms über Tauchbeschichtung**

Vor der Beschichtung werden die Substrate mit EtOH und Druckluft gesäubert. Die Beschichtungslösung aus Beispiel 2a wird mittels einer Tauchziehanlage auf FTO-Glas mit einer Ziehgeschwindigkeit von 30 mm/min appliziert und nach erfolgter Beschichtung für 24 h bei 60°C getempert. **Figur 5** zeigt REM-Aufnahmen einer so erhaltenen HP/Fe-MEPE-L1 (3:1)-Elektrode: im Bild A ist die Oberfläche zu sehen und in Bild B eine Bruchkante. Die Schicht ist tiefblau-transparent (Haze < 1 %), homogen und besitzt sehr geringe Oberflächenrauigkeit. Die Schichtdicke liegt bei 590 nm.

**Beispiel 2c** - **Spektroelektrochemische Charakterisierung eines mittels Tauchzieh-Verfahren hergestellten HP/MEPE-L1-Dünnfilms**

Die Messung wurde in einer spektroelektrochemische Zelle (Glasküvette mit Teflondeckel) in Kombination mit einem UV-Vis-Spektrometer mit Lichtleiterkabeln durchgeführt. Die elektrochemische Zelle besteht aus einer HP/Fe-MEPE-Schicht auf TCO-Substraten als Arbeitselektrode (WE), einem Platin-Draht als Gegenelektrode (CE) und einem Flüssigelektrolyten (z. B. 1 M $LiClO_4$ in PC). Als Spannungsquelle wurde ein Netzteil verwendet und die Schichten mittels Kupferklebeband und Krokodilklemmen kontaktiert.

**Figur 6** zeigt eine in-situ erfolgte spektroelektrochemische Halbzellenmessung der elektrochromen Eigenschaften der HP/Fe-MEPE-L1-Schicht aus Beispiel 2c. Als Elektrolyt wurde 1 M $LiClO_4$ in PC (Propylencarbonat) verwendet. Die Farbwerte sind angegeben. Die Schicht schaltet von einem tiefblauen nach einem blassgrünen, praktisch farblosen Ton bei einer Spannung von 2,5 V. In dem hier gezeigten Beispiel wurde ein Transmissionshub $\Delta\tau_v$ von 62% erreicht (gemäß DIN E410).

**Beispiel 2d** - **Herstellung eines HP/MEPE-L1-Dünnfilms über Schlitzdüsenbeschichtung im Rolle-zu-Rolle-Verfahren**

200 ml einer gemäß Beispiel 2a hergestellten Beschichtungslösung werden filtriert und mittels einer Mikrozahnringpumpe und einer Schlitzdüse der Breite 250 mm im Rolle-zu-Rolle-Verfahren auf PET-ITO-Folie appliziert. Ein ausgewählter Satz möglicher Beschichtungsparameter ist in Tabelle 4 zusammengestellt.

**Tabelle 4.** Herstellungsparameter zur Herstellung eines HP/MEPE-L1-Dünnfilms im Rolle-zu-Rolle-Verfahren.

| Corona | Maske [$\mu$m] | Pumpe Dosier volumen [ml/min] | Trock nung | Schicht-Breite [mm] | Band geschwind. [m/min] | Nassfilmdicke (berechnet) [$\mu$m] |
|---|---|---|---|---|---|---|
| optional | 50 | 2,5 | 120 °C | 250 | 0,8 | 12,5 |

**Beispiel 2e** - **Spektroelektrochemische Charakterisierung eines mittels Schlitzdüsenbeschichtung im Rolle-zu-Rolle-Verfahren hergestellten HP/MEPE-L1-Dünnfilms**

**Figur 7** zeigt eine in-situ erfolgte spektroelektrochemische Messung (A) und L*a*b*-Werte (B) der elektrochromen Eigenschaften der HP/Fe-MEPE-L1-Schicht (Verhältnis 3:1) aus Beispiel 2d. Als Elektrolyt wurde 1 M $LiClO_4$ in PC (Propylencarbonat) verwendet. Die Schicht schaltet von einem tiefblauen in einen blassgrünen, praktisch farblosen Farbton bei einer Spannung von 2,5 V. In dem hier gezeigten Beispiel wurde für diesen Farbübergang ein Transmissionshub $\Delta\tau_v$ von 52% erreicht (gemäß DIN E410). Bei negativer Spannung schaltet die Schicht in einen graugrün gefärbten Zustand. Überraschenderweise wurde hier gefunden, dass das MEPE sichtbares Licht in diesem Zustand gleichmäßig, d.h. breitbandig über das gesamte Spektrum verteilt, absorbiert. Diese Eigenschaft ist für eine Anwendung im Automobilbereich von großem Interesse, da sie es potenziell ermöglicht, einfallendes Sonnenlicht farbneutral zu modulieren.

**Beispiel 2f - Herstellung eines HP/MEPE-L0-Dünnfilms über Tauchbeschichtung**

Vor der Beschichtung werden die Substrate mit EtOH und Druckluft gesäubert. Eine analog zu Beispiel 2a, aber ohne hybridpolymeres Bindemittel hergestellte Beschichtungslösung mit 28 mM Fe-MEPE-L0 (Formel siehe obige Tabelle 2) in EtOH wird im Tauchzieh-Verfahren mit einer Ziehgeschwindigkeit von 50 mm·min$^{-1}$ auf FTO-Glas oder PET-ITO-Folie appliziert und nach erfolgter Beschichtung für 24 h bei 60°C getempert. **Figur 8** zeigt REM-Aufnahmen einer so erhaltenen HP/Fe-MEPE-L0 (3:1)-Elektrode: im Bild A ist die Oberfläche zu sehen und in Bild B eine Bruchkante. Die Schicht besitzt sehr geringe Oberflächenrauigkeit, die Schichtdicke liegt bei etwa 250 nm.

**Beispiel 2g** - **Spektroelektrochemische Charakterisierung eines mittels Tauchzieh-Verfahren hergestellten HP/MEPE-L0-Dünnfilms**

**Figur 9** zeigt eine in-situ erfolgte spektroelektrochemische Messung (A) und L*a*b*-Werte (B) der elektrochromen Eigenschaften der HP/Fe-MEPE-L0-Schicht aus Beispiel 2f. Als Elektrolyt diente 1 M $LiClO_4$ in PC. Die Schicht schaltet von einem türkisblauen in einen blassgrünen, praktisch farblosen Farbton bei einer Spannung von 2,0 V. In dem hier gezeigten Beispiel wurde für diesen Farbübergang ein Transmissionshub $\Delta\tau_v$ von 57 % erreicht (gemäß DIN E410). Bei negativer Spannung schaltet die Schicht in einen neutral gefärbten, grauen Zustand. Die Absorptionsbande verschiebt sich dabei vom sichtbaren in den IR-Bereich. Auch diese Beobachtung erfolgte überraschend. Sichtbares Licht wird in diesem Zustand breitbandig, über das gesamte Spektrum verteilt, also farbneutral absorbiert. Zusätzlich tritt eine Absorption infraroter Strahlung auf, was eine noch weitergehende Modulation von einfallendem Sonnenlicht und des damit einhergehenden Wärmeeintrags ermöglicht.

**Beispiel 2h** - **Herstellung eines zwei MEPE enthaltenden Dünnfilms**

Vor der Beschichtung werden die Substrate mit EtOH und Druckluft gesäubert. Eine analog zu Beispiel 2a hergestellte Beschichtungslösung mit 15 mM HP/Fe-MEPE-L1 und 15 mM HP/Fe-MEPE-LO in EtOH/MeOH/2-Butoxyethanol wird im Tauchzieh-Verfahren mit einer Ziehgeschwindigkeit von 50 mm/min auf FTO-Glas oder PET-ITO-Folie appliziert und nach erfolgter Beschichtung für 24 h bei 60°C getempert. Das Beispiel wurde mit Ziehgeschwindigkeiten von 70 und 100 mm/min wiederholt. **Figur 10** zeigt ein Foto (A) sowie die Absorptionsspektren (B) einer so erhaltenen HP/Fe-MEPE-L0/L1 (1:1) -Elektrode mit unterschiedlichen Schichtdicken auf FTO-Glas. Das Maximum der MLCT-Bande liegt bei etwa 613 nm.

**Beispiel 2i** - **Herstellung zweier je ein MEPE enthaltender Dünnfilme**

Vor der Beschichtung werden die Substrate mit EtOH und Druckluft gesäubert. Eine analog zu Beispiel 2a hergestellte Beschichtungslösung mit 15 mM HP/Fe-MEPE-**L0** in EtOH/MeOH/ 2-Butoxyethanol wird im Tauchzieh-Verfahren mit einer Ziehgeschwindigkeit von 100 $mm \cdot min^{-1}$ auf FTO-Glas oder PET-ITO-Folie appliziert und nach erfolgter Beschichtung für 24 h bei 60°C getempert. Danach erfolgt die Überbeschichtung mit einer zweiten Beschichtungslösung aus 15 mM HP/Fe-MEPE-**L1** in EtOH/MeOH/2-Butoxyethanol, ebenfalls mittels Tauchzieh-Verfahren und einer Ziehgeschwindigkeit von 30 $mm \cdot min^{-1}$. Nach der Beschichtung werden die Schichten wiederum für 24 h bei 60°C getempert. **Figur 11** zeigt ein Absorptionsspektrum einer so erhaltenen HP/Fe-MEPE-L0-Elektrode, die mit einer HP/Fe-MEPE-L1-Schicht überbeschichtet worden war. Das Maximum der MLCT-Bande liegt bei etwa 596 nm.

**Beispiel 3a** - **Herstellung einer optisch aktiven Ionenspeicherschicht (PB) (Gegenelektroden-Schicht)**

PB-Schichten werden aus einer wässrigen Lösung von 0,01 M $K_3Fe(CN)_6$, 0,01 M $FeCl_3 \cdot 6\ H_2O$ und 0,01 M HCl mit Hilfe einer elektrophoretischen Tauchbeschichtungsanlage auf FTO-Glas oder PET-ITO-Folie galvanostatisch abgeschieden. Bei konstanter Stromdichte und entsprechender Zeit kann die gewünschte Abscheidekapazität kontrolliert eingestellt werden; für dieses Beispiel wurde der günstige Wert von 80 nm Schichtdicke gewählt. **Figur 12** zeigt ein Absorptionsspektrum einer solchen PB-Schicht mit einer Abscheidekapazität von 3,6 $mC \cdot cm^{-2}$ auf FTO-Glas. Das Maximum des Metal-metal charge transfer (MMCT)-Übergangs von PB, der für die blaue Farbe verantwortlich ist, liegt bei etwa 712 nm.

**Beispiel 3a** - **Vermessung einer optisch inaktiven Ionenspeicherschicht ($V_2O_5$)**

Eine gemäß M. Hajzeri et al. (Solar Energy Materials & Solar Cells 99 (2012) 62-72) auf PET-ITO-Folie hergestellte $V_2O_5$-Schicht wird im UV-VIS-Spektrometer vermessen. Solche $V_2O_5$-Schichten haften sehr gut auf PET-ITO-Folie, zeigen nur eine schwache Elektrochromie (=> geringe optische Modulation) und besitzen üblicherweise Färbeeffizienzen von < $\pm 20\ cm^2/C$. Das Schichtmaterial zeigt eine breite Absorption im blauen Spektralbereich, die ihm eine gelbliche Färbung verleiht. **Figur 13** zeigt ein Transmissionsspektrum der Schicht mit einer visuellen Transmission $\tau_v$ = 71 %.

**Beispiel 4a** - **Herstellung einer Vollzelle nach manuellem Verfahren**

Die Assemblierung der Vollzelle kann, wie oben dargestellt, deckungsgleich oder versetzt erfolgen. Der technische Ablauf ist in beiden Fällen vergleichbar. Konkret wurde auf eine erste Elektrode nach den Beispielen 2b, 2f, 2h und 2i mit Hilfe eines Filmziehgerätes und eines Filmziehrahmens ein Polymerelektrolyt nach Beispiel 1b aufgebracht. Die zweite Elektrode (nach Beispiel 3a) wurde anschließend auf die mit Elektrolyt beschichtete erste Elektrode aufgelegt. In beiden Fällen diente PET-ITO-Folie mit einem Flächenwiderstand von 50 Ohm als Substrat mit innenseitig elektrisch leitender Oberfläche. Der so erzeugte Folienstapel wurde bei mäßigem Druck kaschiert. Anschließend wurde die Elektrolytschicht mittels UV-Licht vernetzt und die Zelle an den Rändern mit einem 2-Komponenten-Kleber versiegelt. Zuletzt wurden die Kontakte an den freien Randstellen längs der Zelle, L-förmig oder umlaufend aufgebracht.

**Beispiel 4b** - **Herstellung einer Vollzelle nach dem Rolle-zu-Rolle Verfahren**

Ein wie in Beispiel 4a beschriebener Folienstapel wurde über ein kontinuierliches Verfahren, gemäß EP 2 570 846 A1 hergestellt. Dazu wurde der Polymerelektrolyt (nach Beispiel 1b) mit Hilfe einer Schlitzdüse auf die erste Elektrode (nach Beispiel 2d) im Rolle-zu-Rolle Verfahren aufgebracht. Die zweite Elektrode wurde anschließend einmal deckungsgleich und einmal versetzt, je nach Kontaktierungskonzept, auf die erste Elektrode mit mäßigem Druck ("auf Schlitz") kalt laminiert. An den seitlichen, freien Randstellen wurde die Kontaktierung (selbstklebende Metallstreifen) manuell aufgebracht. Schließlich wurde der Polymerelektrolyt mittels eines Rolle-zu-Rolle UV-Moduls ausgehärtet, das kaschierte Band vereinzelt (geschnitten) und die Zellen wurden versiegelt.

**Beispiel 5a** - **Charakterisierung einer Vollzelle (Transmission und Colorimetrie)**

Eine nach Beispiel 4a hergestellte Zelle zeigt im UV/Vis-Spektrometer nachfolgendes, charakteristisches Transmissionsspektrum (siehe **Figur 14**). Im gefärbten (= "ungeschalteten") Zustand, bei 0 V, ist im Spektrum deutlich die MLCT-Bande des Fe-MEPE bei 595 nm und die MMCT Bande des PB bei 712 nm erkennbar. Durch das Anlegen einer Spannung von 1,6 V wird die Zelle in ihren Hellzustand gefahren (= "geschaltet"). Das vorliegende Beispiel zeigt noch eine Restabsorption im roten Spektralbereich, die auf die MMCT-Bande des PB zurückzuführen ist. Eine Vollzelle mit

einer Ladungsdichte von 3,0 mC/cm$^2$ sowohl für die Fe-MEPE- als auch für die PB-Elektrode erreicht visuelle Transmissionswerte von 22% und 74% im Dunkel- bzw. Hellzustand (nach DIN E410).

**Beispiel 5b** - **Charakterisierung einer Vollzelle (Cyclovoltammetrie)**

Eine nach Beispiel 4a hergestellte Vollzelle zeigt das in **Figur 15** dargestellt, charakteristische Cyclovoltammogramm (CV). Bei einer Scan-Rate (SR) (= Vorschubgeschwindigkeit des Potentials) von 10 mV/s bildet die Zelle je eine breiten Oxidations- und Reduktionswelle aus. Das anodische Spitzenpotential befindet sich um 1,2 V, das kathodische Spitzenpotential um 0,7 V. In den ersten Zyklen, spätestens bis zum 25 Zyklus, läuft in der Zelle ein Formierungsprozess ab (durchgezogene Linie), danach schaltet die Zelle völlig reversibel (gestrichelte Linie).

## Patentansprüche

**1.** Elektrochromes Element, umfassend
ein erstes und ein zweites Substrat, wobei jedes dieser Substrate transparent für sichtbares Licht ist und auf seiner ins Innere der elektrochromen Zelle weisenden Seite eine elektrisch leitende Oberfläche besitzt,
eine schichtförmige Arbeitselektrode, die in Kontakt mit der elektrisch leitenden Oberfläche eines ersten der beiden Substrate steht und eine Metall-Komplexverbindung aufweist, die in der Lage ist, eine Redoxreaktion einzugehen, wobei der Übergang vom oxidierten in den reduzierten Zustand mit einer Farbvertiefung und der Übergang vom reduzierten in den oxidierten Zustand mit einer entsprechende Farbabschwächung einhergeht,
eine Elektrolytschicht, die sich zwischen der Arbeitselektrode und dem anderen Substrat befindet und bewegliche Metallkationen enthält,
eine zwischen dem Elektrolytmaterial und der leitenden Beschichtung des anderen Substrats befindlichen Gegenelektrode, die in der Lage ist, bewegliche Kationen des Elektrolytmaterials zu interkalieren und/oder eine Redoxreaktion einzugehen, wobei das Material der zweiten Elektrode beim Übergang vom oxidierten in den reduzierten Zustand keiner Farbvertiefung im Wellenlängenbereich der Farbvertiefung der Metall-Komplexverbindung unterliegt, **dadurch gekennzeichnet, dass** die Elektrolytschicht ein transparenter, flexibler Film ist, der hergestellt wurde unter Verwendung mindestens der folgenden Komponenten:

(a) eines vernetzbaren hybriden Prepolymers
(b) eines vernetzbaren organischen Monomers oder Prepolymers,
(c) eines nicht vernetzbaren, thermoplastischen organischen Polymers, und
(d) eines dissoziierbaren Salzes, dessen anorganische Kationen sich bei Vorhandensein einer Ladungsdifferenz zwischen der Arbeitselektrode und der Gegenelektrode zwischen diesen Elektroden bewegen können.

**2.** Elektrochromes Element nach Anspruch 1, worin die Prepolymere der Elektrolytschicht in vernetzter Form vorliegen.

**3.** Elektrochromes Element nach Anspruch 1 oder 2, worin das vernetzbare hybride Prepolymer (a) ein organisches Kieselsäure(hetero)polykondensat ist oder enthält und/oder worin das vernetzbare, organische Monomer oder Prepolymer (b) eine organische Verbindung ist, die in der Lage ist, eine Polymerisationsreaktion, insbesondere eine C=C-Additionspolymerisation einzugehen und/oder worin das nicht vernetzbare, thermoplastische Polymer (c) ausgewählt wird aus der Gruppe, die Polyacrylate, Acrylatesterpolymerisate und Polyether sowie Copolymere umfasst, welche (Poly-)Acrylat, ein Acrylatesterpolymerisat und/oder einen Polyether enthalten.

**4.** Elektrochromes Element nach Anspruch 3, worin das vernetzbare hybride Prepolymer (a) über Kohlenstoff an Silicium gebundene Gruppen mit organisch vernetzbaren oder organisch vernetzten Resten, insbesondere (Meth)Acrylgruppen, Norbornenylgruppen oder Epoxygruppen, aufweist und/oder worin das vernetzbare, organische Monomer oder Prepolymer (b) pro Molekül mindestens eine Gruppe, die eine oder mehrere C=C-Doppelbindungen enthält, insbesondere Vinyl-, Acrylat-, Methacrylatgruppen, oder mindestens eine Epoxygruppe aufweist und/oder worin das nicht vernetzbare, thermoplastische Polymer (c) ausgewählt ist unter Poly(methylmethacrylaten), Ethylmethacrylat-Methylacrylat-Copolymeren sowie ggf. acrylat-funktionellen Poly(propylenoxid-ethylen oxid)-Copolymeren.

**5.** Elektrochromes Element nach einem der voranstehenden Ansprüche, worin die Elektrolytschicht weiterhin enthält:

(e) ein Lösemittel oder ein Lösemittelgemisch und/oder
(f) Nanopartikel.

6. Elektrochromes Element nach einem der voranstehenden Ansprüche, worin die Metall-Komplexverbindung der Arbeitselektrode mindestens einen chelatisierenden Komplexliganden aufweist, der Metallatome über zwei oder mehr Stickstoff-, Sauerstoff- oder Schwefelatome binden kann, worin mindestens ein Teil der zwei oder mehr Stickstoff- Sauerstoff- oder Schwefelatome des Komplexliganden freie Elektronenpaare aufweist.

7. Elektrochromes Element nach einem der voranstehenden Ansprüche, worin die Substrate mit elektrisch leitender Oberfläche identisch sind, eine Dicke zwischen 75 $\mu$m und 175 $\mu$m besitzen und aus einer hochleitfähigen Kunststofffolie bestehen, deren nach innen weisende Oberfläche mit einer TCO-Schicht, einem Schichtstapel aus Isolator/Metall/Isolator, einem ggf. über- oder unterbeschichteten Metallgitter, einer elektrisch leitfähigen Polymerschicht oder Mischformen daraus versehen ist.

8. Elektrochromes Element nach einem der Ansprüche 1 bis 6, worin das erste Substrat mit elektrisch leitender Oberfläche ein auf seiner Innenseite elektrisch leitendes flexibles Kunststoffsubstrat und das zweite Substrat ein auf seiner Innenseite elektrisch leitendes starres Glassubstrat ist.

9. Verwendung eines elektrochromen Elements nach einem der voranstehenden Ansprüche als Bestandteil einer Fahrzeugverglasung, insbesondere einer Automobilverglasung, oder eines Helmvisiers.

10. Fahrzeugverglasung oder Helmvisier, umfassend ein elektrochromes Element nach einem der Ansprüche 1 bis 8.

11. Fahrzeugverglasung nach Anspruch 10, worin das elektrochrome Element identische Substrate mit elektrisch leitender Oberfläche besitzt, deren Dicke zwischen 75 $\mu$m und 175 $\mu$m liegt und die aus einer hochleitfähigen Kunststofffolie bestehen, deren nach innen weisende Oberfläche mit einer Schicht aus einem transparenten, leitfähigen Metalloxid, einem Schichtstapel aus Isolator/Metall/Isolator, einem ggf. über- oder unterbeschichteten Metallgitter, einer elektrisch leitfähigen Polymerschicht oder Mischformen daraus versehen ist, wobei die Fahrzeugverglasung die folgenden Komponenten in der angegebenen Reihenfolge umfasst: Glas / Klebefolie / Substratfolie mit leitfähiger Schicht / Arbeitselektrode / Elektrolyt / Gegenelektrode / Substratfolie mit leitfähiger Schicht / Klebefolie / Glas.

12. Fahrzeugverglasung nach Anspruch 10, worin das erste Substrat des elektrochromen Elements mit elektrisch leitender Oberfläche ein auf seiner Innenseite elektrisch leitendes flexibles Kunststoffsubstrat und das zweite Substrat des elektrochromen Elements ein auf seiner Innenseite elektrisch leitendes starres Glassubstrat ist, wobei die Fahrzeugverglasung die folgenden Komponenten in der angegebenen Reihenfolge umfasst: Glassubstrat mit leitfähiger Schicht / Arbeitselektrode oder Gegenelektrode / Elektrolyt / Gegenelektrode oder Arbeitselektrode / Substratfolie mit leitfähiger Schicht / Klebefolie / Glas.

13. Fahrzeug, umfassend eine Fahrzeugverglasung nach einem der Ansprüche 10 bis 12 oder Helm, umfassend ein Helmvisier nach Anspruch 10.

14. Verfahren zum Herstellen eines elektrochromen Elements nach einem der Ansprüche 1 bis 8, umfassend die Schritte:

Schritt 1: Bereitstellen eines ersten lichtdurchlässigen Substrats mit elektrisch leitender Oberfläche und Abscheiden einer Schicht aus dem Material der Arbeitselektrode auf nasschemischem Wege aus der Flüssigphase, vorzugsweise kontinuierlich und/oder durch Schlitzdüsenbeschichtung, auf der elektrisch leitenden Oberfläche des Substrats, derart, dass ein Randbereich der elektrisch leitenden Oberfläche frei bleibt,
Schritt 2: Bereitstellen eines zweiten lichtdurchlässigen Substrats und Abscheiden einer Schicht aus dem Material der Gegenelektrode aus der Flüssigphase, vorzugsweise über ein galvanisches Verfahren, auf der elektrisch leitenden Oberfläche des Substrats, derart, dass ein Randbereich der elektrisch leitenden Oberfläche frei bleibt,
Schritt 3: Zuschneiden der mit den Elektroden beschichteten Substrate auf die gewünschte Größe,
Schritt 4: Nasschemisches Abscheiden der Elektrolytmischung aus der Flüssigphase auf einer der Elektroden, vorzugsweise kontinuierlich und/oder durch Schlitzdüsenbeschichtung, thermisches oder photochemisches Vernetzen des Elektrodenmaterials, wobei dieser Schritt vor oder nach Schritt 5 erfolgen kann, oder nasschemisches Abscheiden der Elektrolytmischung aus der Flüssigphase auf einem Hilfssubstrat, thermisches oder photochemisches Vernetzen des Elektrolytmaterials, und Entfernen der hierbei gebildeten, selbstragenden Schicht des Elektrolytmaterials von dem Hilfssubstrat,
Schritt 5: Kaschieren oder Laminieren der beschichteten Substrate mit der Elektrolytschicht derart, dass die Elektrodenschicht zwischen den beiden Elektroden zu liegen kommt, wobei die Substrate entweder derart versetzt zueinander angeordnet werden, dass die von Elektrodenmaterial freigebliebenen Bereiche komplementär zueinander liegen, oder dass die beschichteten Substrate deckungsgleich zueinander angeordnet werden,
Schritt 6: Anbringen von Leiterbahnen auf solchen Randbereichen der beiden Substrate, die keine Schicht aus dem Material der Arbeitselektrode tragen, und dichtendes Versiegeln der seitlichen Randbereiche des elektrochromen Elements mit Hilfe eines Versiegelungsmaterials derart, dass die Leiterbahnen außerhalb der Versiegelung ankontaktiert werden können, wobei dann, wenn die Substrate deckungsgleich zueinander angeordnet vorliegen, das Versiegelungsmaterial ein elektrisch isolierendes Material ist und so angeordnet wird, dass es die Leiterbahnen der beiden Substrate voneinander trennt.

**15.** Verfahren nach Anspruch 14, weiterhin umfassend das Integrieren des elektrochromen Elements in ein Verbundglas, wobei
entweder beide Substrate aus einem flexiblen Kunststoffmaterial bestehen und das elektrochrome Element mit Hilfe von zwei Klebefolien oder von Klebstoffmaterial zwischen zwei Glasscheiben oder zwei lichtdurchlässigen, flexiblen oder nicht flexiblen Kunststoffscheiben angeordnet wird,
oder eines der beiden Substrate eine Glasscheibe ist und das andere der beiden Substrate aus einem flexiblen Kunststoffmaterial besteht und eine Glasscheibe mit Hilfe einer Klebefolie oder von Klebstoffmaterial auf dem Substrat aus flexiblem Kunststoffmaterial angebracht wird.

## Claims

**1.** An electrochromic element, comprising
a first and a second substrate, wherein each of these substrates is transparent for visible light and has an electrically conductive surface on its side facing inwardly toward the electrochromic cell,
a layered operating electrode which is in contact with the electrically conductive surface of a first of the two substrates and has a metal complex compound which is capable of entering into a redox reaction, where the transition from the oxidized to the reduced state is attended by an increase of color, and the transition from the reduced to the oxidized state is attended by a corresponding weakening of color,
an electrolyte layer which is located between the operating electrode and the other substrate and contains movable metal cations,
a counterelectrode located between the electrolyte material and the conductive coating of the other substrate, which is capable of intercalating mobile cations of the electrolyte material and/or of entering into a redox reaction, where the material of the second electrode is not subjected to an increase of color depth in the wavelength region of the increase of color depth of the metal complex compound during the transition from the reduced to the oxidized state, wherein the electrolyte layer is a transparent, flexible film that was produced using at least the following components:

(a) a crosslinkable hybrid prepolymer
(b) a crosslinkable organic monomer or prepolymer,
(c) a non-crosslinkable thermosplastic organic polymer and
(d) a dissociable salt whose inorganic cations can, in the presence of a charge difference between the operating electrode and the counterelectrode, move between said electrodes.

**2.** The electrochromic element according to Claim 1, wherein the prepolymers of the electrolyte layer are present in crosslinked form.

**3.** The electrochromic element according to Claim 1 or 2, wherein the crosslinkable hybrid prepolymer (a) is or contains an organic silicic acid(hetero)polycondensate and/or wherein the crosslinkable organic monomer or prepolymer (b) is an organic compound which is capable of undergoing a polymerization reaction, in particular a C=C addition polymerization, and/or wherein the non-crosslinkable, thermoplastic polymer (c) is selected from the group comprising polyacrylates, acrylate ester polymers and polyethers as well as copolymers containing (poly)acrylate, an acrylate ester polymer and/or a polyether.

**4.** The electrochromic element according to Claim 3, wherein the crosslinkable hybrid prepolymer (a) has groups, which are bonded to silicon via carbon, with organically crosslinkable or organically crosslinked residues, in particular (meth)acrylic groups, norbornenyl groups or epoxy groups, and/or wherein the crosslinkable organic monomer or prepolymer (b) contains at least one group per molecule that has one or more C=C double bonds, in particular vinyl-, acrylate-, methacrylate groups, or at least one epoxy group and/or wherein the non-crosslinkable, thermoplastic polymer (c) is selected from poly(methyl methacrylates), ethyl methacrylate-methyl acrylate copolymers and optionally acrylate- functional poly(propylene oxide-ethylene oxide)-copolymers.

**5.** The electrochromic element according to one of the preceding claims, wherein the electrolyte layer further comprises:

(e) a solvent or a solvent mixture and/or
(f) nanoparticles.

**6.** The electrochromic element according to one of the preceding claims, wherein the metal complex compound of the operating electrode has at least one chelating complexing ligand which can bind metal atoms via two or more nitrogen-, oxygen- or sulfur atoms, wherein at least some of the two or more nitrogen-, oxygen-, or sulfur atoms of the complexing ligand having free electron pairs.

**7.** The electrochromic element according to one of the preceding claims, wherein the substrates having an electrically conductive surface are identical, have a thickness of between 75 $\mu$m and 175 $\mu$m and consist of a highly conductive plastic film whose inwardly facing surface is provided with a TCO layer, a layer stack comprising insulator/metal/insulator, an optionally over- or under-coated metal mesh, an electrically conductive polymer layer or mixed forms thereof.

**8.** The electrochromic element according to one of Claims 1 to 6, wherein the first substrate with an electrically conductive surface is a flexible plastic substrate that it electrically conductive on its inner side and the second substrate is a rigid glass substrate that is electrically conductive on its inner side.

**9.** The use of an electrochromic element according to any one of the preceding claims as a component of a vehicle glazing, in particular of an automotive glazing, or of a helmet visor.

**10.** A vehicle glazing or helmet visor, comprising an electrochromic element according to any one of Claims 1 to 8.

**11.** The vehicle glazing according to Claim 10, wherein the electrochromic element comprises identical substrates with electrically conductive surfaces with thickness from between 75 $\mu$m and 175 $\mu$m and that consist of a highly conductive plastic film whose inwardly facing surface is provided with a layer of a transparent conductive metal oxide, a layer stack of insulator/metal/insulator, an optionally over- or under-coated metal mesh, an electrically conductive polymer layer or mixed forms thereof, wherein the vehicle glazing comprises the following components in the indicated order: glass/adhesive film/substrate film with conductive layer/operating electrode/electrolyte/counterelectrode/substrate film with conductive layer/adhesive film/glass.

**12.** The vehicle glazing according to Claim 10, wherein the first substrate of the electrochromic element with an electrically conductive surface is a flexible plastic substrate that is electrically conductive on its inner side and the second substrate of the electrochromic element is a rigid glass substrate that is electrically conductive on its inner side, wherein the vehicle glazing comprises the following components in the indicated order: glass substrate with conductive layer/operating electrode or counterelectrode/electrolyte/counterelectrode or operating electrode/substrate film with conductive layer/adhesive film/glass.

**13.** The vehicle comprising a vehicle glazing according to any one of Claims 10 to 12 or helmet comprising a helmet visor according to Claim 10.

**14.** A method for producing an electrochromic element according to any one of Claims 1 to 8, comprising the steps:

Step 1: providing a first transparent substrate having an electrically conductive surface and depositing a layer of the material of the operating electrode from the liquid phase by wet-chemical approach, preferably continuously and/or by slot die coating, onto the electrically conductive surface of the substrate such that an edge region of the electrically conductive surface remains free,
Step 2: providing a second transparent substrate, and depositing a layer of the material of the counterelectrode from the liquid phase, preferably via a galvanic process, onto the electrically conductive surface of the substrate such that an edge region of the electrically conductive surface remains free,
Step 3: cutting the substrates coated with the electrodes to the desired size,
Step 4: wet chemical deposition of the electrolyte mixture from the liquid phase onto one of the electrodes, preferably continuously and/or by slot die coating, thermal or photochemical crosslinking of the electrode material, wherein said step can take place before or after step 5, or wet chemical deposition of the electrolyte

mixture from the liquid phase onto a support substrate, thermal or photochemical crosslinking of the electrolyte material, and removal of the thereby formed self-supporting layer of the electrolyte material from the support substrate,

Step 5: coating or laminating the coated substrates with the electrolyte layer such that the electrode layer is positioned between the two electrodes, wherein the substrates are either arranged offset to each other such that areas that have remained free of electrode material are arranged complementary to one another, or that the coated substrates are arranged congruently to one another,

Step 6: attaching conductor tracks to such edge regions of the two substrates which do not carry a layer of the material of the operating electrode, and tightly sealing the lateral edge regions of the electrochromic element by means of a sealing material such that the conductor tracks can be contacted outside of the sealing, wherein, when the substrates are present in a congruent arrangement to one another, the sealing material is an electrically insulating material and is arranged such that it separates the conductor tracks of the two substrates from one another.

**15.** Method according to Claim 14, further comprising the integration of the electrochromic element into a laminated glass, wherein

either both substrates consist of a flexible plastic material and the electrochromic element is arranged between two glass panes or two light-transmissive, flexible or non-flexible plastic panels by means of two adhesive films or adhesive material, or one of the two substrates is a glass pane and the other of the two substrates consists of a flexible plastic material and a glass pane is attached to the substrate of flexible plastic material with the aid of an adhesive film or adhesive material.

## Revendications

**1.** Elément électrochrome, comprenant

un premier substrat et un second substrat, dans lequel chacun de ces substrats est transparent pour la lumière visible et possède sur son côté tourné vers l'intérieur de la cellule électrochrome une surface électriquement conductrice,

une électrode de travail stratifiée, qui est en contact avec la surface électriquement conductrice d'un premier des deux substrats et qui présente un composé de complexe métallique, qui est en mesure de générer une réaction d'oxydoréduction, dans lequel la transition de l'état oxydé à l'état réduit s'accompagne d'une intensification des couleurs et la transition de l'état réduit à l'état oxydé s'accompagne d'un affadissement des couleurs correspondant,

une couche électrolytique, qui se trouve entre l'électrode de travail et l'autre substrat et qui contient des cations métalliques mobiles,

une contre-électrode se trouvant entre le matériau électrolytique et le revêtement conducteur de l'autre substrat, qui est en mesure d'intercaler des cations mobiles du matériau électrolytique et/ou de générer une réaction d'oxydoréduction, dans lequel le matériau de la seconde électrode n'est soumis, lors de la transition de l'état oxydé à l'état réduit, à aucune intensification des couleurs dans la plage de longueurs d'onde de l'intensification des couleurs du composé de complexe métallique,

**caractérisé en ce que** la couche électrolytique est un film souple transparent, qui a été produit en utilisant au moins un des composants suivants:

(a) un prépolymère hybride réticulable,

(b) un monomère ou un prépolymère organique réticulable,

(c) un polymère organique thermoplastique non réticulable, et

(d) un sel dissociable, dont les cations inorganiques peuvent, en présence d'une différence de charge entre l'électrode de travail et la contre-électrode, se déplacer entre ces électrodes.

**2.** Elément électrochrome selon la revendication 1, dans lequel les prépolymères de la couche électrolytique sont présents sous forme réticulée.

**3.** Elément électrochrome selon la revendication 1 ou 2, dans lequel le prépolymère hybride réticulable (a) est ou contient un (hétéro)polycondensat organique de l'acide silicique et/ou dans lequel le monomère ou le prépolymère organique réticulable (b) est un composé organique, qui est en mesure de générer une réaction de polymérisation, en particulier une polymérisation par addition C=C et/ou dans lequel le polymère thermoplastique non réticulable (c) est sélectionné dans le groupe qui comprend des polyacrylates, des polymérisats d'ester acrylique et des polyéthers ainsi que des copolymères, qui contiennent un (poly)acrylate, un polymérisat d'ester acrylique et/ou un

polyéther.

4. Elément électrochrome selon la revendication 3, dans lequel le prépolymère hybride réticulable (a) présente des groupes liés au silicium par un carbone avec des radicaux organiquement réticulables ou organiquement réticulés, en particulier des groupes (méth)acryle, des groupes norbornényle ou des groupes époxy, et/ou dans lequel le monomètre ou le prépolymère organique réticulable (b) présente par molécule au moins un groupe, qui contient une ou plusieurs liaison(s) double(s) C=C, en particulier des groupes vinyle, acrylate, méthacrylate, ou au moins un groupe époxy, et/ou dans lequel le polymère thermoplastique non réticulable (c) est sélectionné parmi des poly(méthacrylates de méthyle), des copolymères méthacrylate d'éthyle-acrylate de méthyle, ainsi qu'éventuellement des copolymères poly(oxyde de propylène-oxyde d'éthylène).

5. Elément électrochrome selon l'une quelconque des revendications précédentes, dans lequel la couche électrolytique contient en outre:

   (e) un solvant ou un mélange de solvants, et/ou
   (f) des nanoparticules.

6. Elément électrochrome selon l'une quelconque des revendications précédentes, dans lequel le composé de complexe métallique de l'électrode de travail présente au moins un ligand à complexe chélatisant, qui peut lier des atomes métalliques par l'intermédiaire de deux atomes d'azote, d'oxygène ou de soufre, ou plus, dans lequel au moins une partie des deux atomes d'azote, d'oxygène ou de soufre, ou plus, du ligand à complexe présente des paires d'électrons libres.

7. Elément électrochrome selon l'une quelconque des revendications précédentes, dans lequel les substrats avec une surface électriquement conductrice sont identiques, possèdent une épaisseur comprise entre 75 μm et 175 μm et sont constitués d'un film en matière plastique hautement conducteur, dont la surface tournée vers l'intérieur est dotée d'une couche de TCO, d'une pile de couches isolant/métal/isolant, d'une grille métallique revêtue éventuellement au-dessus ou en dessous, d'une couche polymère électriquement conductrice ou de formes mixtes de celles-ci.

8. Elément électrochrome selon l'une quelconque des revendications 1 à 6, dans lequel le premier substrat avec une surface électriquement conductrice est un substrat en matière plastique souple électriquement conducteur sur son côté intérieur et le second substrat est un substrat en verre rigide électriquement conducteur sur son côté intérieur.

9. Utilisation d'un élément électrochrome selon l'une quelconque des revendications précédentes comme composant d'un vitrage de véhicule, en particulier d'un vitrage d'automobile, ou d'une visière de casque.

10. Vitrage de véhicule ou visière de casque, comprenant un élément électrochrome selon l'une quelconque des revendications 1 à 8.

11. Vitrage de véhicule selon la revendication 10, dans lequel l'élément électrochrome possède des substrats identiques avec une surface électriquement conductrice, dont l'épaisseur se situe entre 75 μm et 175 μm et qui sont constitués d'un film en matière plastique hautement conducteur, dont la surface tournée vers l'intérieur est dotée d'une couche en un oxyde métallique conducteur transparent, d'une pile de couches isolant/métal/isolant, d'une grille métallique revêtue éventuellement au-dessus ou en dessous, d'une couche polymère électriquement conductrice ou de formes mixtes de celles-ci, dans lequel le vitrage de véhicule comprend les composants suivants dans l'ordre indiqué: verre / film adhésif / film de substrat avec couche conductrice / électrode de travail / électrolyte / contre-électrode / film de substrat avec couche conductrice / film adhésif / verre.

12. Vitrage de véhicule selon la revendication 10, dans lequel le premier substrat de l'élément électrochrome avec une surface électriquement conductrice est un substrat en matière plastique souple électriquement conducteur sur son côté intérieur et le second substrat de l'élément électrochrome est un substrat en verre rigide électriquement conducteur sur son côté intérieur, dans lequel le vitrage de véhicule comprend les composants suivants dans l'ordre indiqué: substrat en verre avec couche conductrice / électrode de travail ou contre-électrode / électrolyte / contre-électrode ou électrode de travail / film de substrat avec couche conductrice / film adhésif / verre.

13. Véhicule, comprenant un vitrage de véhicule selon l'une quelconque des revendications 10 à 12 ou casque, comprenant une visière de casque selon la revendication 10.

**14.** Procédé de fabrication d'un élément électrochrome selon l'une quelconque des revendications 1 à 8, comprenant les étapes suivantes:

Etape 1: préparation d'un premier substrat transparent avec une surface électriquement conductrice et dépôt d'une couche constituée du matériau de l'électrode de travail par voie chimique humide à partir de la phase liquide, de préférence de façon continue et/ou par revêtement avec buse fendue, sur la surface électriquement conductrice du substrat, de telle manière qu'une zone de bord de la surface électriquement conductrice reste libre,
Etape 2: préparation d'un second substrat transparent et dépôt d'une couche constituée du matériau de la contre-électrode à partir de la phase liquide, de préférence par un procédé galvanique, sur la surface électriquement conductrice du substrat, de telle manière qu'une zone de bord de la surface électriquement conductrice reste libre,
Etape 3: découpage des substrats revêtus avec les électrodes à la grandeur désirée,
Etape 4: dépôt chimique humide du mélange électrolytique à partir de la phase liquide sur une des électrodes, en préférence de façon continue et/ou par revêtement avec buse fendue, réticulation thermique ou photochimique du matériau d'électrode, dans lequel cette étape peut être exécutée avant ou après l'étape 5, ou dépôt chimique humide du mélange électrolytique à partir de la phase liquide sur un substrat auxiliaire, réticulation thermique ou photochimique du matériau électrolytique, et enlèvement de la couche autoportante du matériau électrolytique ainsi formée du substrat auxiliaire,
Etape 5: contre-collage ou stratification des substrats revêtus avec la couche électrolytique, de telle manière que la couche d'électrode vienne se placer entre les deux électrodes, dans lequel les substrats ou bien sont disposés en décalage l'un par rapport à l'autre de telle manière que les zones laissées libres de matériau d'électrode soient agencées de façon complémentaire l'une à l'autre, ou bien les substrats revêtus sont disposés en recouvrement total l'un par rapport à l'autre,
Etape 6: pose de pistes conductrices sur les zones de bord des deux substrats qui ne portent pas de couche constituée du matériau de l'électrode de travail, et scellage étanche des zones de bord latérales de l'élément électrochrome à l'aide d'un matériau de scellage, de telle manière que les pistes conductrices puissent être contactées à l'extérieur du scellage, dans lequel, lorsque les substrats sont disposés en recouvrement total l'un par rapport à l'autre, le matériau de scellage est un matériau électriquement isolant et est disposé de telle manière qu'il sépare les unes des autres les pistes conductrices des deux substrats.

**15.** Procédé selon la revendication 14, comprenant en outre l'intégration de l'élément électrochrome dans une vitre composite, dans lequel
soit les deux substrats sont constitués d'un matériau en matière plastique souple et on dispose l'élément électrochrome à l'aide de deux films adhésifs ou d'un matériau adhésif entre deux vitres ou entre deux feuilles en matière plastique transparentes souples ou non souples,
soit un des deux substrats est une vitre et l'autre des deux substrats est constitué par un matériau en matière plastique souple et on applique une vitre à l'aide d'un film adhésif ou d'un matériau adhésif sur le substrat en matériau en matière plastique souple.

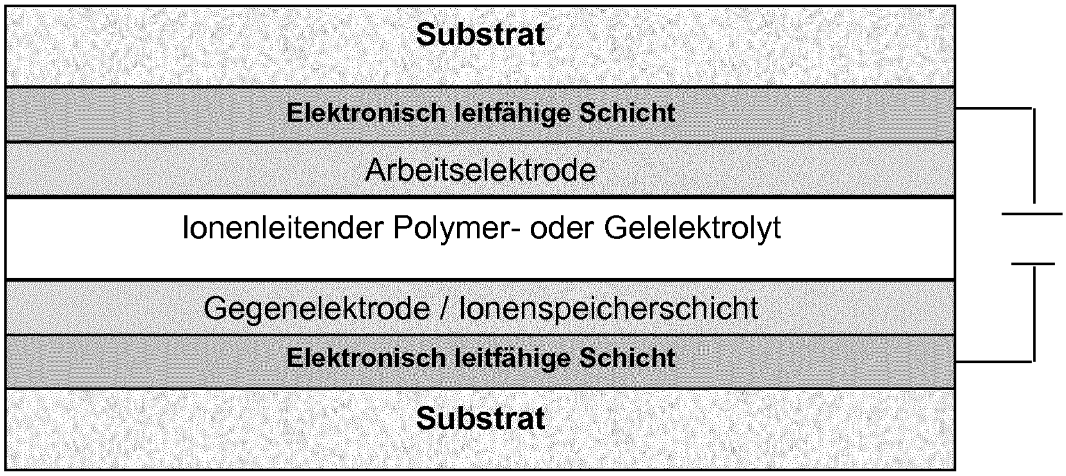


Figur 1

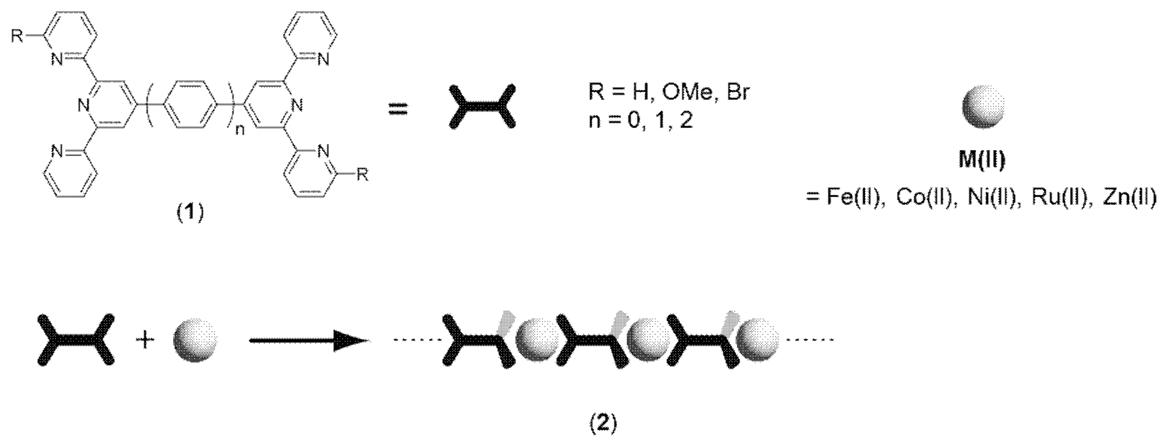


(1)

(2)

Figur 2

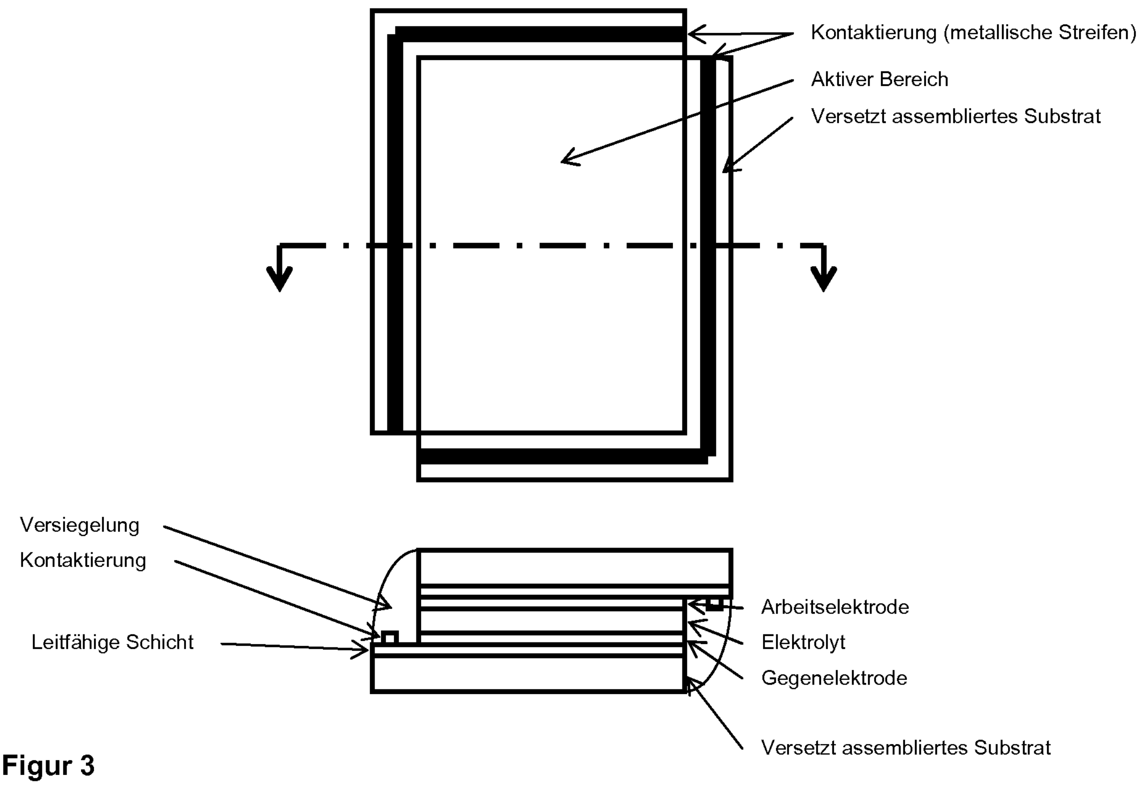


**Figur 3**

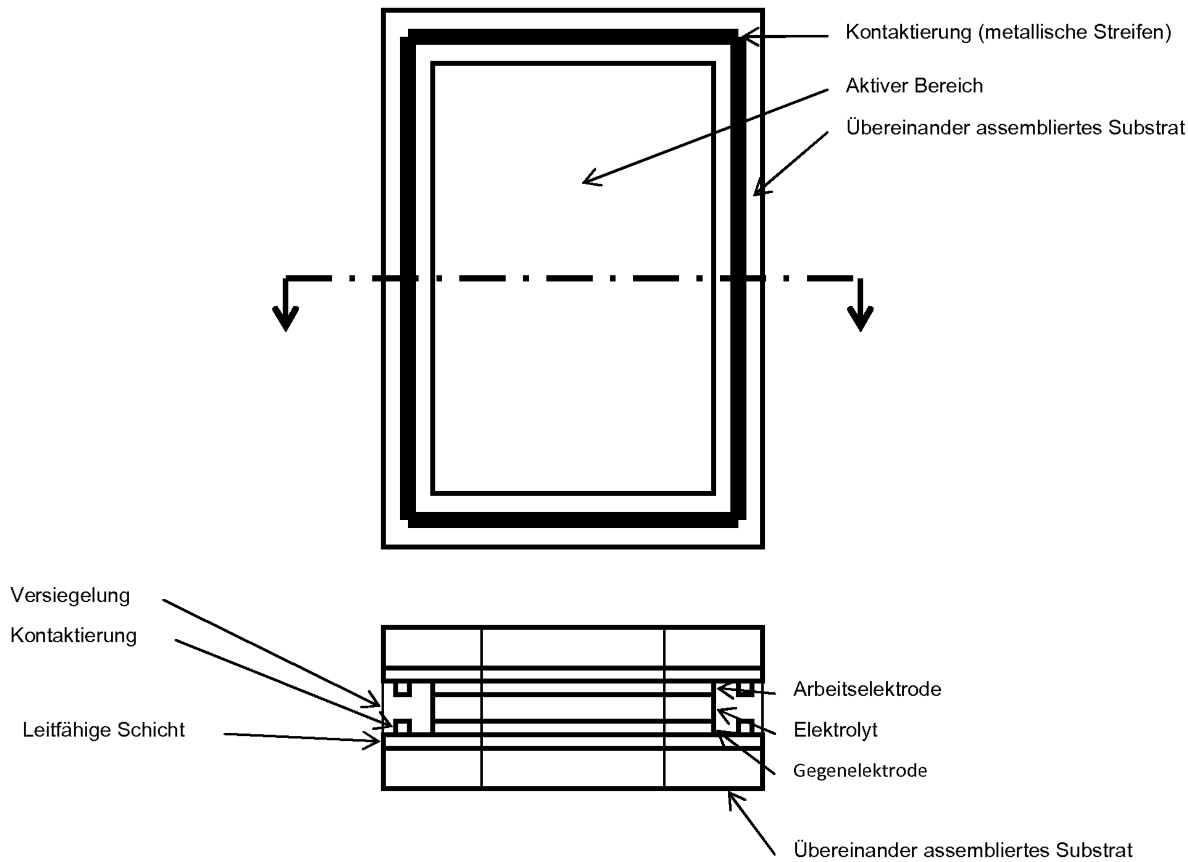


**Figur 4**

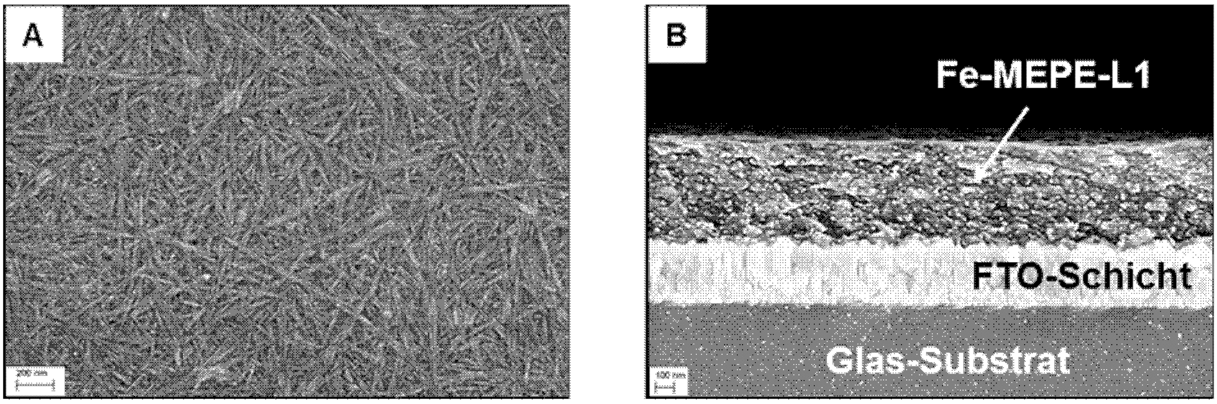


Figur 5

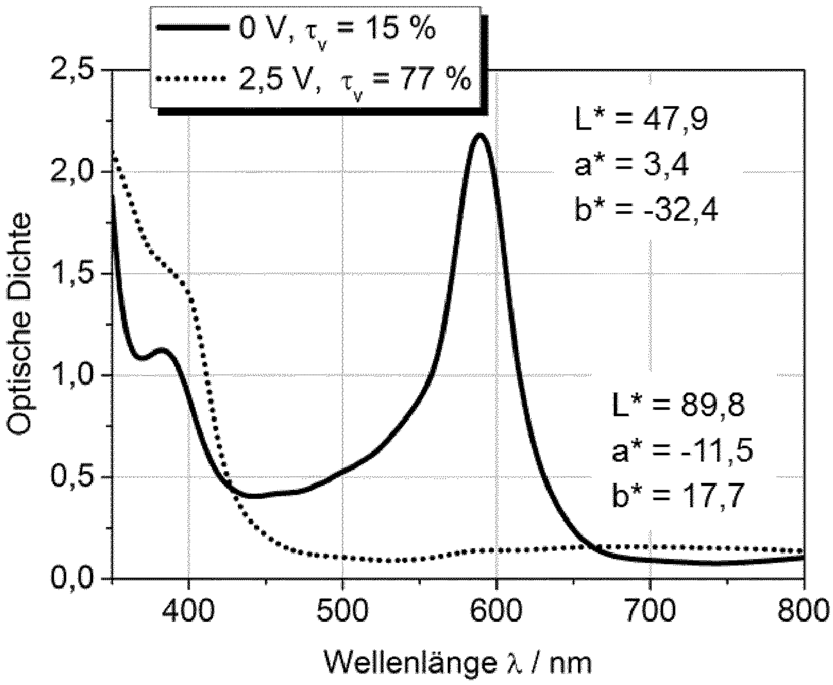


Figur 6

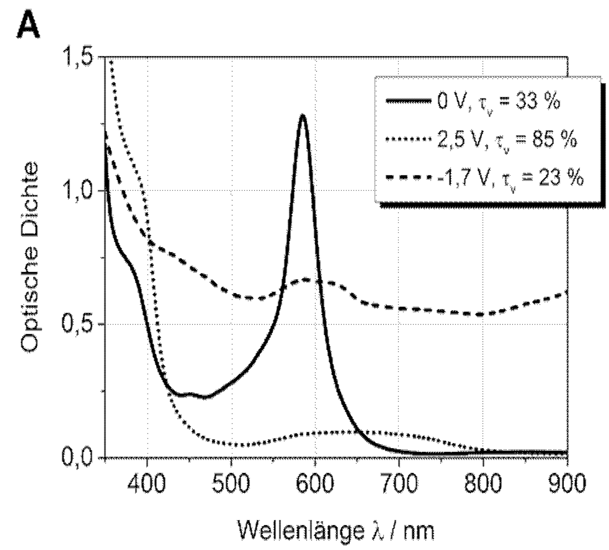


**B**

| 0 V | 2,5 V | -1,7 V |
|---|---|---|
| L* = 65,3 | L* = 93,9 | L* = 53,6 |
| a* = -0,3 | a* = -8,5 | a* = -5,3 |
| b* = -25,1 | b* = 8,7 | b* = 7,0 |

**Figur 7**

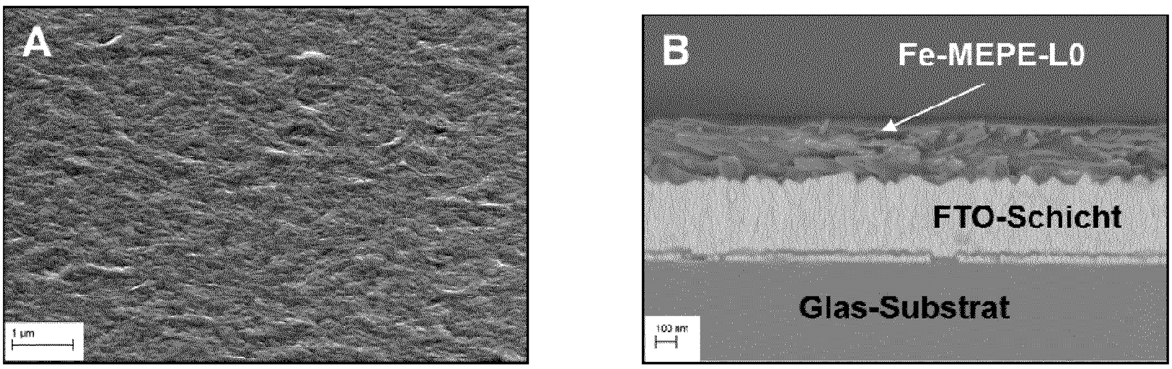


**Figur 8**

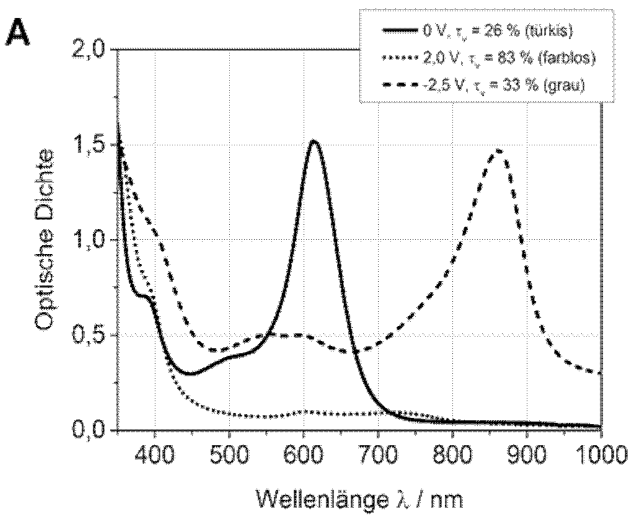


**B**

| 0 V | 2,0 V | -2,5 V |
|---|---|---|
| L* = 59,6 | L* = 92,8 | L* = 64,2 |
| a* = -26,3 | a* = -6,2 | a* = -4,3 |
| b* = -25,6 | b* = 11,9 | b* = 5,6 |

**Figur 9**

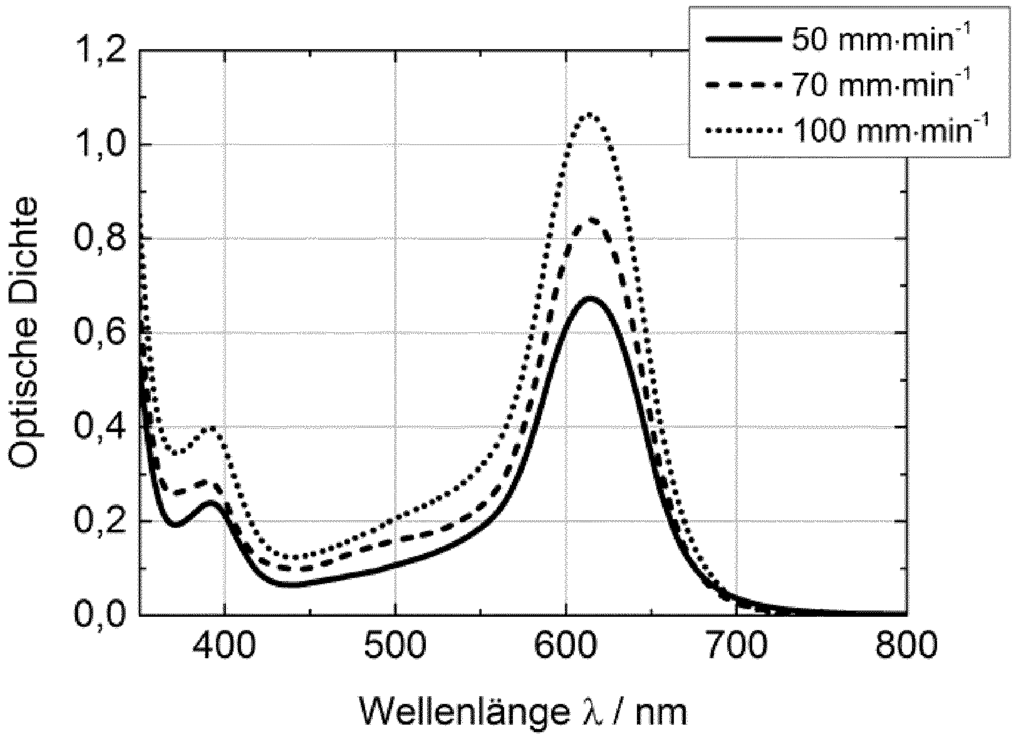


**Figur 10**

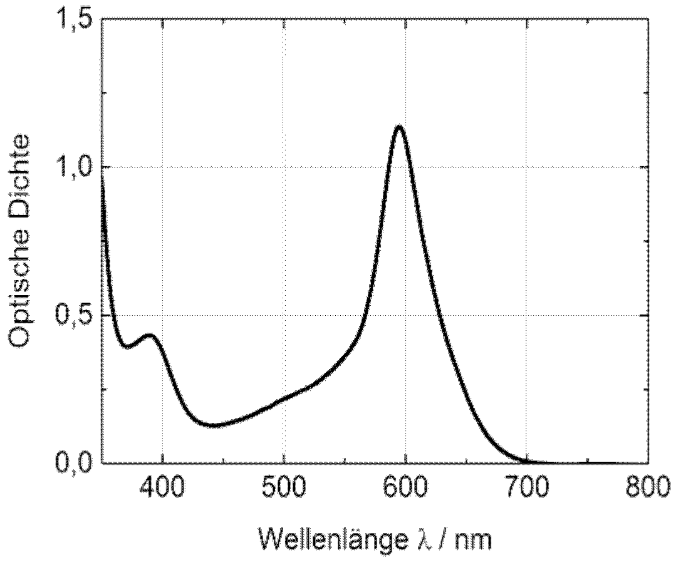


HP/Fe-MEPE-L0-Schicht: 100 mm·min$^{-1}$
HP/Fe-MEPE-L1-Schicht: 30 mm·min$^{-1}$

**Figur 11**

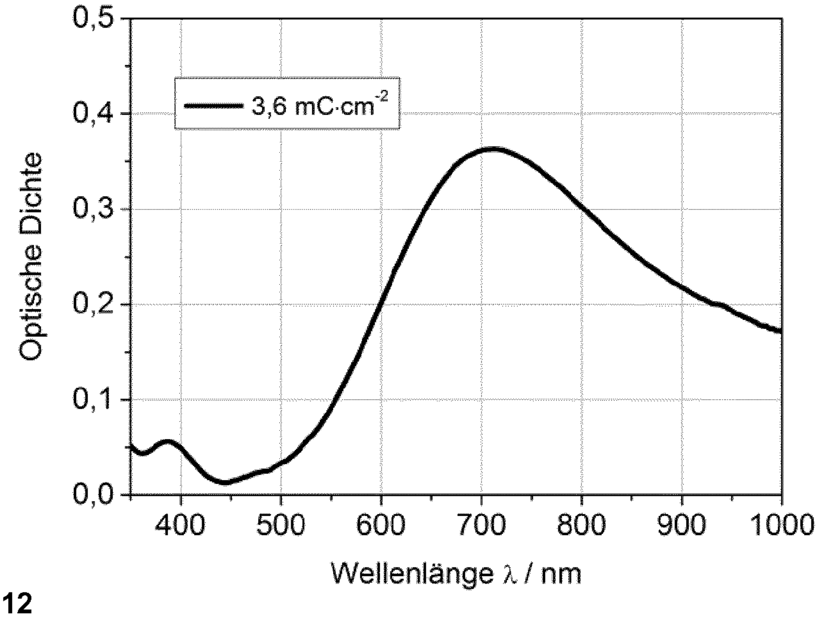


**Figur 12**

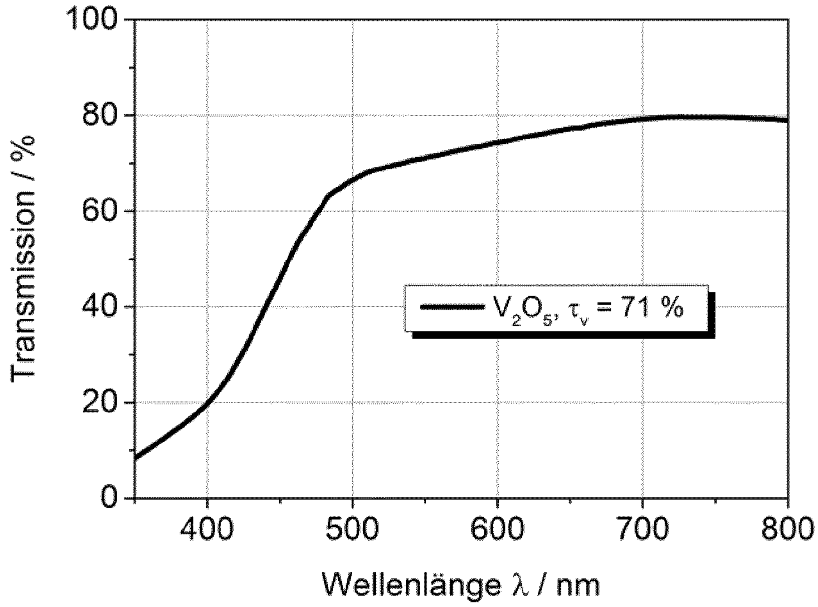


**Figur 13**

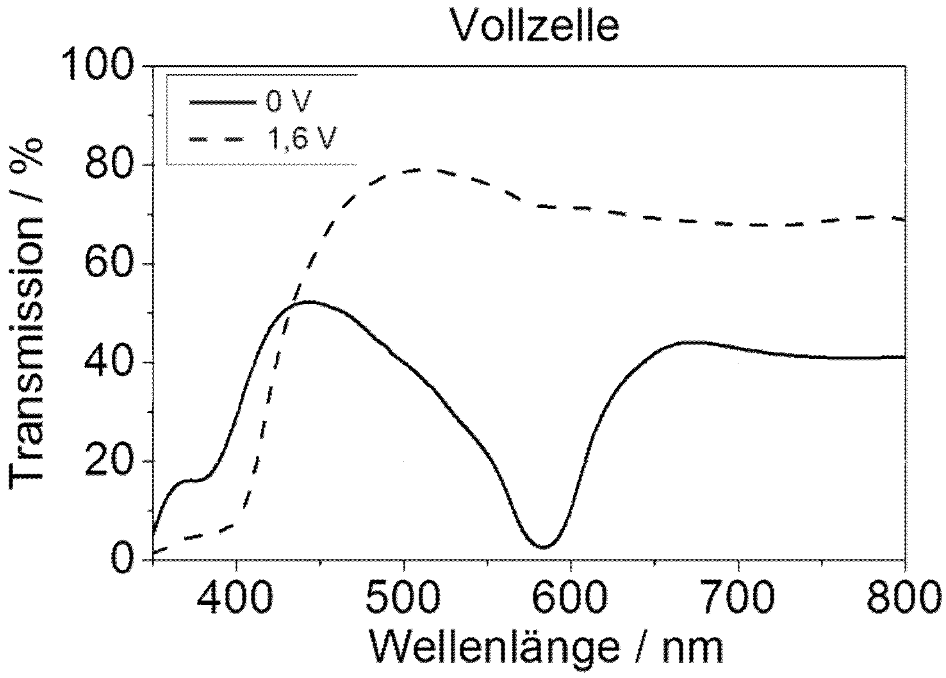


Figur 14

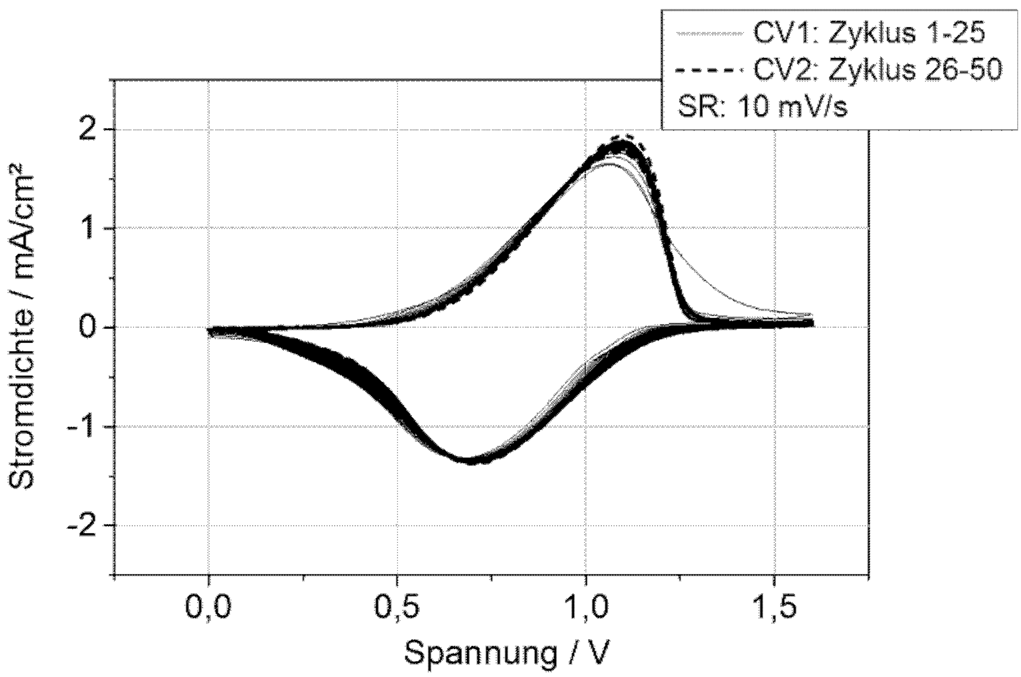


Figur 15

Seriengrafik:

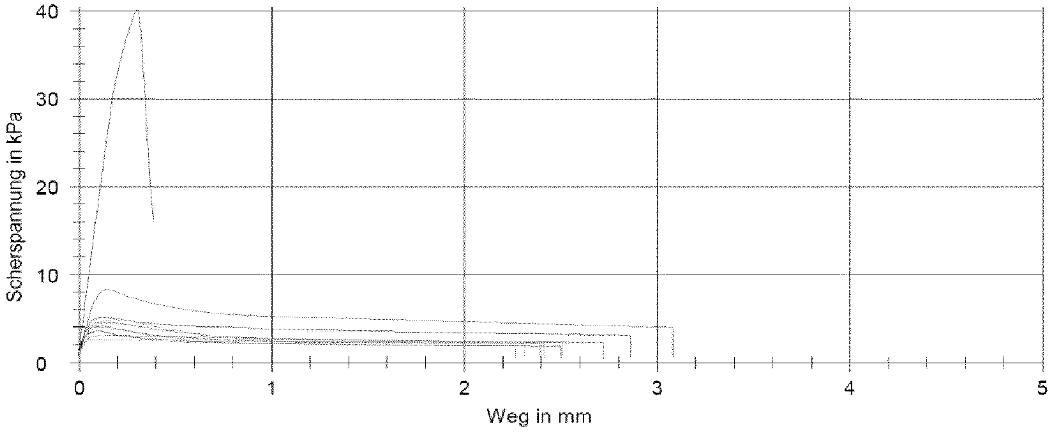


Seriengrafik:

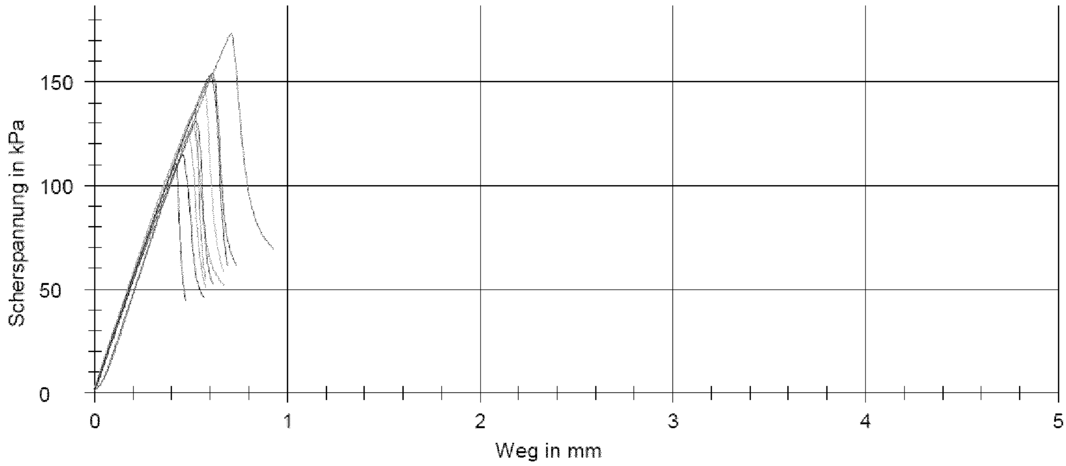


Seriengrafik:

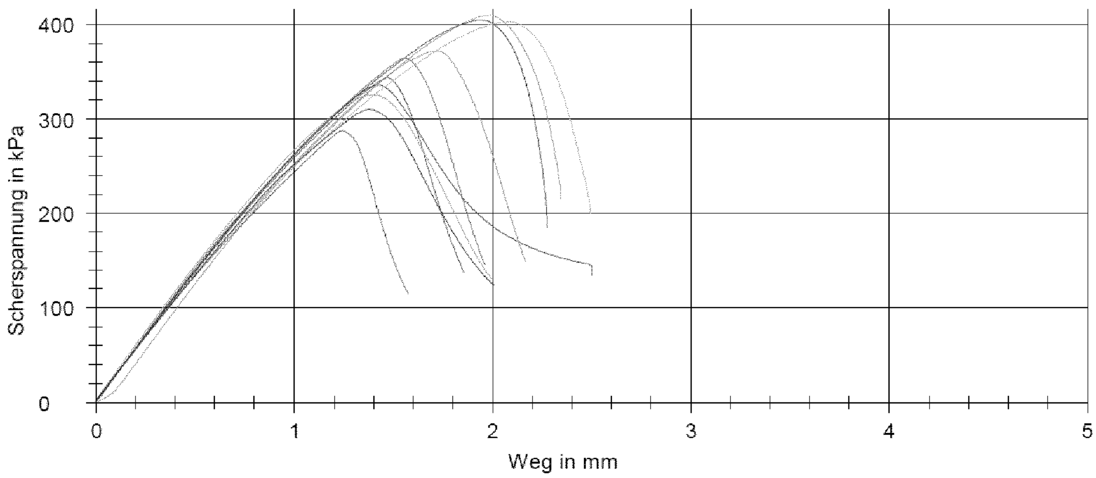


Figur 16

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2013041562 A1, U. Posset
- US 20090052006 A1
- US 20080239452 A1
- US 2014009812 A1
- US 2013201550 A1
- EP 2618210 A1
- US 8378062 B2
- EP 2535767 A1
- US 2012307341 A1
- WO 2012093547 A1
- US 20127127554 A1
- EP 2444839 A1
- WO 2011096386 A1
- US 7923530 B2
- WO 20107147017 A1
- US 20097270589 A1
- WO 20087143324 A1
- WO 20087081762 A1
- WO 2007049371 A1
- JP 5013365 B
- JP 5013366 B
- JP 5062711 B
- JP 5062712 B
- JP 5092140 B
- JP 2007112769 A
- JP 2007112957 A
- JP 2008162967 A
- JP 2008162976 A
- JP 2008162979 A
- US 20090270589 A
- WO 2008143324 A1
- EP 14185797 A
- US 6040056 A
- EP 2570846 A1


### In der Beschreibung aufgeführte Nicht-Patentliteratur


- **M. HAJZERI et al.** *Solar Energy Materials and Solar Cells,* 2012, vol. 99, 62-72
- **A. J. WIDJAJA et al.** *Solar Energy Materials & Solar Cells,* 2008, vol. 92, 97-100
- **GRANQVIST et al.** *Thin Solid Films,* 2003, vol. 442, 201-211
- *Marcel and Tarascon, Solid State Ionics,* 2001, vol. 143, 89-101
- **L.-M. HUANG et al.** *Electrochimica Acta,* 2006, vol. 51, 5858-5863
- *Sol. Energy Mater. Sol. Cells,* 2008, vol. 92, 101-106
- **C. MA et al.** *Electrochimica Acta,* 2008, vol. 54, 598-605
- **A. PAWLICKA.** *Recent Patents on Nanotechnology,* 2009, vol. 3, 177-1819
- **R. BAETENS et al.** *Sol. Energy Mater. Sol. Cells,* 2010, vol. 94, 94-105
- **C. A. DA SILVA et al.** *Langmuir,* 2012, vol. 28, 3332-3337
- **G. R. WHITTELL et al.** *Nat. Mater,* 2011, vol. 10, 176-188
- **HIGUCHI et al.** *J. Inorg. Organomet. Polym. Mater.,* 2009, vol. 19, 74-78
- **HOSSAIN ; SATO ; HIGUCHI.** *Chem. Asian J.,* 2013, vol. 8, 76-79
- **M. HIGUCHI et al.** *J. Inorg. Organomet. Polym. Mater.,* 2009, vol. 19, 74-78
- **POSTHUMUS.** *Journal of Colloid and Interface Science,* 2004, vol. 269, 109-1167
- **M. HAJZERI et al.** *Solar Energy Materials & Solar Cells,* 2012, vol. 99, 62-72